# EUROPEAN PATENT APPLICATION

(11) **EP 4 455 972 A1**
(43) Date of publication of application: **30.10.2024**
(21) Application number: 22910710.7
(22) Date of filing: 21.11.2022
(51) Int. Cl.: G06Q 30/015

(54) **INFORMATION PROCESSING DEVICE, INFORMATION PROCESSING METHOD, AND PROGRAM**

(30) Priority: 24.12.2021 JP 2021211522
(71) Applicant: Sony Group Corporation, Tokyo 108-0075 (JP)
(72) Inventor: HIRAI, Yuma, Tokyo 108-0075 (JP); INAISHI, Daisuke, Tokyo 108-0075 (JP); KANAO, Rinna, Tokyo 108-0075 (JP); FRANCIS THANGADURAI, Premajanth, Tokyo 108-0075 (JP); OKADA, Genki, Tokyo 108-0075 (JP)
(74) Representative: D Young & Co LLP
(86) International application number: PCT/JP2022/042968
(87) International publication number: WO 2023/119992

(57) **Abstract**

A user state estimator configured to estimate a degree of interest, a degree of understanding, and the like of a user by performing learning processing using user state information input by a meeting participant user is generated and used. By executing machine learning processing using user state information input to a user terminal by a user participating in a meeting via a communication network, a user state estimator configured to estimate a user state, for example, a degree of interest, a degree of understanding, and a degree of fatigue of a user on the basis of at least one of an image or voice of a meeting participant user is generated. Furthermore, the user state is estimated on the basis of an image and voice of a meeting participant user by using the generated user state estimator, and identification information and an icon indicating the estimated user state are output to the user terminal.

## Description

### TECHNICAL FIELD

The present disclosure relates to an information processing device, an information processing method, and a program. More specifically, the present disclosure relates to an information processing device, an information processing method, and a program for executing processing of generating a user state estimator (learning model) configured to estimate emotion and the like of a user participating in a remote meeting such as a remote business talk via a communication network on the basis of an image, voice, and the like, and user state estimation processing using the generated user state estimator (learning model).

### BACKGROUND ART

In recent years, remote interactions or meetings using communication terminals, such as online meetings or online business talks using image and voice communications via a network, have become increasingly popular.

For example, in an online business talk via a network, a communication terminal of a sales-side user who desires to sell a product and a communication terminal of a customer side who is a customer are connected via a communication network such as the Internet, and images and voice are transmitted and received between the terminals for the business talk.

Such a remote meeting using a communication terminal, however, has a problem of difficulty in grasping the emotion or state of the other party, unlike face-to-face meetings.

The sales-side user can observe the state of the customer via a screen, but information obtained from the screen is limited as compared with information obtained in a case where the sales-side user actually meets the customer. For example, it is difficult to grasp subtle changes in expression.

Specifically, for example, it is difficult to accurately grasp the emotion or state of the customer such as whether or not the customer understands or does not understand an explanation made by the sales-side user, or whether or not the customer is interested in the explanation.

Note that, for example, Patent Document 1 (WO 2019/082687 A) discloses, as a conventional technology, human emotion estimation processing.

Patent Document 1 discloses a configuration for estimating human emotions by analyzing human brain waves and calculating a score on the basis of the analysis result.

It is, however, difficult for the configuration to measure brain waves of users participating in a general remote meeting, and the configuration has no versatility.

### CITATION LIST

### PATENT DOCUMENT

Patent Document 1: WO 2019/082687 A

### SUMMARY OF THE INVENTION

### PROBLEMS TO BE SOLVED BY THE INVENTION

The present disclosure has been made in view of the above-described problems, for example, and an object is to provide an information processing device, an information processing method, and a program for efficiently generating a user state estimator (learning model) configured to estimate emotion or a state of a user participating in a remote meeting via a communication network on the basis of an image, voice, and the like, and executing highly accurate user state estimation processing using the generated user state estimator (learning model).

Note that, in an embodiment of the present disclosure, for example, the user state estimator (learning model) can be generated only by performing a simulated meeting, and the user state estimator (learning model) can be generated more efficiently.

### SOLUTIONS TO PROBLEMS

A first aspect of the present disclosure is
an information processing device including:
a user state estimator generation unit configured to generate a user state estimator by executing machine learning processing using user state information input to a user terminal by a user participating in a meeting via a communication network, in which
the user state estimator generation unit
generates a user state estimator configured to estimate a user state on the basis of at least one of image data or voice data of a user participating in a meeting.

Moreover, a second aspect of the present disclosure is
an information processing device including:
a user state estimator configured to estimate a user state on the basis of at least one of image data or voice data of a user participating in a meeting via a communication network; and
a user state estimation result output unit configured to output identification information indicating a user state estimated by the user state estimator, to a user terminal of a user participating in the meeting.

Moreover, a third aspect of the present disclosure is
an information processing method that is executed in an information processing device, the information processing method including:
by a user state estimator generation unit,
executing user state estimator generation processing of generating a user state estimator by executing machine learning processing using user state information input to a user terminal by a user participating in a meeting via a communication network, in which
the user state estimator generation unit
generates a user state estimator configured to estimate a user state on the basis of at least one of image data or voice data of a user participating in a meeting.

Moreover, a fourth aspect of the present disclosure is
an information processing method that is executed in an information processing device, the information processing method including:
by a user state estimator,
executing user state estimation processing of estimating a user state on the basis of at least one of image data or voice data of a user participating in a meeting via a communication network; and
by a user state estimation result output unit,
executing user state estimation result output processing of outputting identification information indicating a user state estimated by the user state estimator, to a user terminal of a user participating in the meeting.

Moreover, a fifth aspect of the present disclosure is
a program for causing an information processing device to execute information processing, the program causing:
a user state estimator generation unit
to execute user state estimator generation processing of generating a user state estimator by executing machine learning processing using user state information input to a user terminal by a user participating in a meeting via a communication network, in which
the user state estimator is a user state estimator configured to estimate a user state on the basis of at least one of image data or voice data of a user participating in a meeting.

Moreover, a sixth aspect of the present disclosure is
a program for causing an information processing device to execute information processing, the program causing:
a user state estimator
to execute user state estimation processing of estimating a user state on the basis of at least one of image data or voice data of a user participating in a meeting via a communication network; and
a user state estimation result output unit
to execute user state estimation result output processing of outputting identification information indicating a user state estimated by the user state estimator, to a user terminal of a user participating in the meeting.

Note that the program of the present disclosure is, for example, a program that can be provided by a storage medium or a communication medium that provides a variety of program codes in a computer-readable format, to an information processing device or a computer system capable of executing the program codes. By providing such a program in a computer-readable format, processing corresponding to the program is implemented on the information processing device or the computer system.

Other objects, features, and advantages of the present disclosure will become apparent from a more detailed description based on an embodiment of the present disclosure described later and the accompanying drawings. Note that a system herein described is a logical set configuration of a plurality of devices, and is not limited to a system in which devices with respective configurations are in the same housing.

According to a configuration of an embodiment of the present disclosure, a configuration is realized in which a user state estimator configured to estimate a degree of interest, a degree of understanding, and the like of a user by performing learning processing using user state information input by a meeting participant user is generated and used.

Specifically, for example, by executing machine learning processing using user state information input to a user terminal by a user participating in a meeting via a communication network, a user state estimator configured to estimate a user state, for example, a degree of interest, a degree of understanding, and a degree of fatigue of a user on the basis of at least one of an image or voice of a meeting participant user is generated. Furthermore, the user state is estimated on the basis of an image and voice of a meeting participant user by using the generated user state estimator, and identification information and an icon indicating the estimated user state are output to the user terminal.

With this configuration, the configuration is realized in which the user state estimator configured to estimate a degree of interest, a degree of understanding, and the like of a user by performing the learning processing using user state information input by a meeting participant user is generated and used.

Note that the effects described herein are merely examples and are not limited, and additional effects may also be provided.

### BRIEF DESCRIPTION OF DRAWINGS

Fig. 1 is a diagram for describing an overview of a configuration of and processing performed by an information processing system of the present disclosure.
Fig. 2 is a diagram for describing an overview of user state estimator (learning model) generation processing.
Fig. 3 is a diagram for describing a usage example of a user state estimator (learning model).
Fig. 4 is a diagram for describing a configuration example in which processing of an information processing device is executed by a sales-side user terminal.
Fig. 5 is a flowchart for describing a sequence of the user state estimator (learning model) generation processing executed by the information processing device.
Fig. 6 is a diagram for describing a specific example of meeting condition (MTG tag) input processing.
Fig. 7 is a diagram for describing an example of processing of inputting a user state score (evaluation value) indicating a user state such as user's own emotion and the like during a meeting.
Fig. 8 is a diagram for describing a setting example of a score (evaluation value) = 1 to 5 of a user state.
Fig. 9 is a view for describing a data example indicating a part of data (meeting log) used for machine learning processing performed by the information processing device.
Fig. 10 is a graph for describing an example of time-series data that can be generated on the basis of a user state score (evaluation value) acquired by the information processing device from a customer-side user terminal.
Fig. 11 is a diagram for describing a configuration example of collecting data used for the machine learning processing performed by the information processing device.
Fig. 12 is a diagram for describing a configuration example where an image, voice, and a user state score are acquired only from the customer-side user terminal and applied to learning processing.
Fig. 13 is a diagram for describing a configuration and processing of the machine learning processing performed by the information processing device.
Fig. 14 is a diagram for describing an example of learning processing for causing a degree-of-interest estimator generation unit (degree-of-interest estimation learning model generation unit) to generate a degree-of-interest estimator (degree-of-interest estimation learning model).
Fig. 15 is a diagram for describing an example of learning processing for causing the degree-of-interest estimator generation unit (degree-of-interest estimation learning model generation unit) to generate the degree-of-interest estimator (degree-of-interest estimation learning model).
Fig. 16 is a diagram for describing an example of learning processing for causing the degree-of-interest estimator generation unit (degree-of-interest estimation learning model generation unit) to generate the degree-of-interest estimator (degree-of-interest estimation learning model).
Fig. 17 is a diagram for describing a processing example of outputting an estimated value of an interest, attention, and favorable impression score of a customer-side user by using the degree-of-interest estimator (degree-of-interest estimation learning model).
Fig. 18 is a diagram for describing a configuration and processing of the degree-of-interest estimator generation unit (degree-of-interest estimation learning model generation unit) that generates a plurality of meeting-condition-corresponding degree-of-interest estimators (degree-of-interest estimation learning models).
Fig. 19 is a diagram for describing an example of combination types of meeting conditions.
Fig. 20 is a diagram for describing an evaluation processing example of the meeting-condition-corresponding degree-of-interest estimator (learning model).
Fig. 21 is a diagram for describing a configuration example of stored data in each database.
Fig. 22 is a diagram for describing a specific example of estimator (learning model) evaluation processing executed by an estimator (learning model) evaluation unit.
Fig. 23 is a table for describing a specific example of meeting conditions to be used as test data.
Fig. 24 is a table for describing a specific example of meeting conditions to be used as test data.
Fig. 25 is a diagram for describing details of user state estimation processing using a user state estimator (user state estimation learning model).
Fig. 26 is a diagram for describing a specific example of degree-of-interest estimation processing of a customer-side user, using the degree-of-interest estimator (degree-of-interest estimation learning model) generated by the information processing device.
Fig. 27 is a diagram for describing an example of a correspondence between a value of an estimation score and a display icon.
Fig. 28 is a diagram for describing an example of a correspondence between a value of an estimation score and a display icon.
Fig. 29 is a diagram for describing an example of a correspondence between a value of an estimation score and a display icon.
Fig. 30 is a diagram for describing a configuration example of the information processing device.
Fig. 31 is a diagram for describing configuration examples of the information processing device and the user terminal.
Fig. 32 is a diagram for describing hardware configuration examples of the information processing device and the user terminal.

### MODE FOR CARRYING OUT THE INVENTION

Hereinafter, an information processing device, an information processing method, and a program according to the present disclosure will be described in detail with reference to the drawings. Note that the description will be made in accordance with the following items.
1. Overview of configuration of and processing performed by information processing system of present disclosure
2. Sequence of processing of generating user state estimator (learning model)
3. Details of user state estimator (learning model) generation processing executed by information processing device
4. User state estimator (learning model) generation processing corresponding to meeting condition executed by information processing device, and processing of selecting high-accuracy user state estimator (learning model) from generated user state estimators (learning models)
5. Details of user state estimation processing using user state estimator (user state estimation learning model)
6. Configuration examples of information processing device and user terminal
7. Hardware configuration examples of information processing device and user terminal
8. Conclusion of configuration of present disclosure

### [1. Overview of configuration of and processing performed by information processing system of present disclosure]

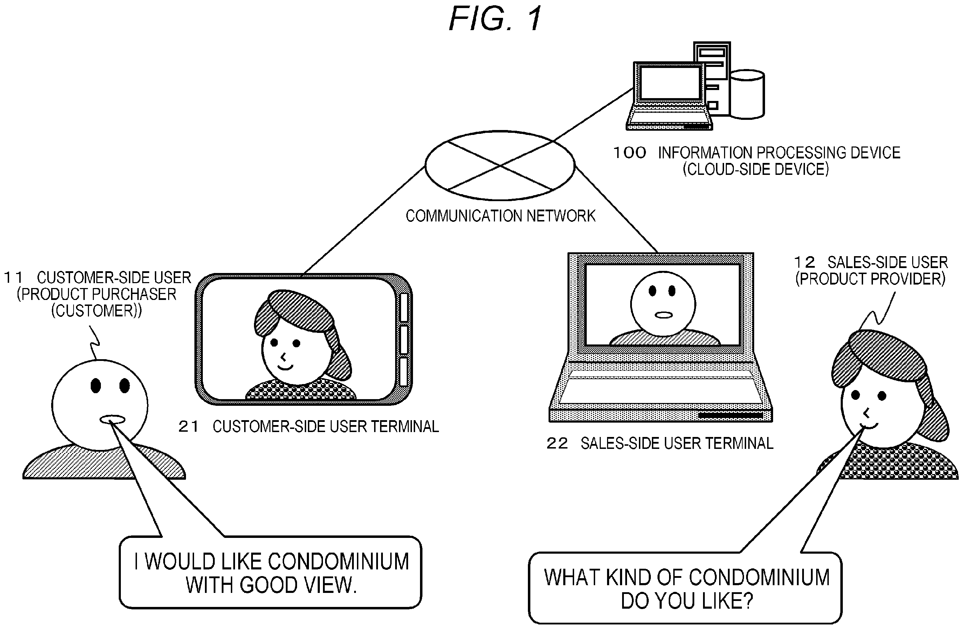

First, an overview of configuration of and processing performed by an information processing system of the present disclosure will be described with reference to Fig. 1 and subsequent figures.

The information processing device of the present disclosure executes the following two processes.
(Process 1) A process of generating a user state estimator (learning model) configured to estimate a user state such as emotion of a user participating in a remote meeting via a communication network on the basis of an image, voice, and the like.
(Process 2) A process of estimating user emotion by using the generated user state estimator (learning model).

Fig. 1 is a diagram illustrating an example of a remote meeting held via a communication network.

Fig. 1 illustrates a customer-side user 11 who is a customer as a potential purchaser and a sales-side user 12 as a product provider.

A customer-side user terminal 21 such as a smartphone and a sales-side user terminal 22 such as a PC are connected via a communication network, and communicates with each other by mutually transmitting and receiving voice and images to conduct a business talk.

In the example illustrated in Fig. 1, the customer-side user 11 who is a customer as a potential purchaser of a condominium, and the sales-side user 12 is a vendor of the condominium.

While listening to desired conditions of the customer-side user 11, the sales-side user 12 gives an explanation including selection of a condominium that meets the desired conditions of the customer-side user 11.

A remote meeting such as the above-described business talk using communication terminals, however, has a problem of difficulty in grasping the user state such as the emotion or degree of understanding of the other party, unlike a face-to-face meeting.

The sales-side user 12 can observe the state of the customer-side user 11 via a screen, but information obtained from the image is less than information obtained in a case of actually facing the customer-side user.

It is difficult for the sales-side user 12 to accurately grasp the state or emotion of the customer-side user 11, such as whether or not the customer-side user understands the explanation made by the sales-side user 12, whether or not the customer-side user is interested in the explanation, or whether or not the customer-side user 11 is annoyed.

The information processing device of the present disclosure generates a user state estimator (learning model) for solving this problem, and estimates a user state such as an emotion or degree of understanding of the user using the generated user state estimator (learning model).

In the example illustrated in Fig. 1, an information processing device 100 that is a cloud-side device performs processing of generating the user state estimator (learning model) and estimates the user state using the generated user state estimator (learning model).

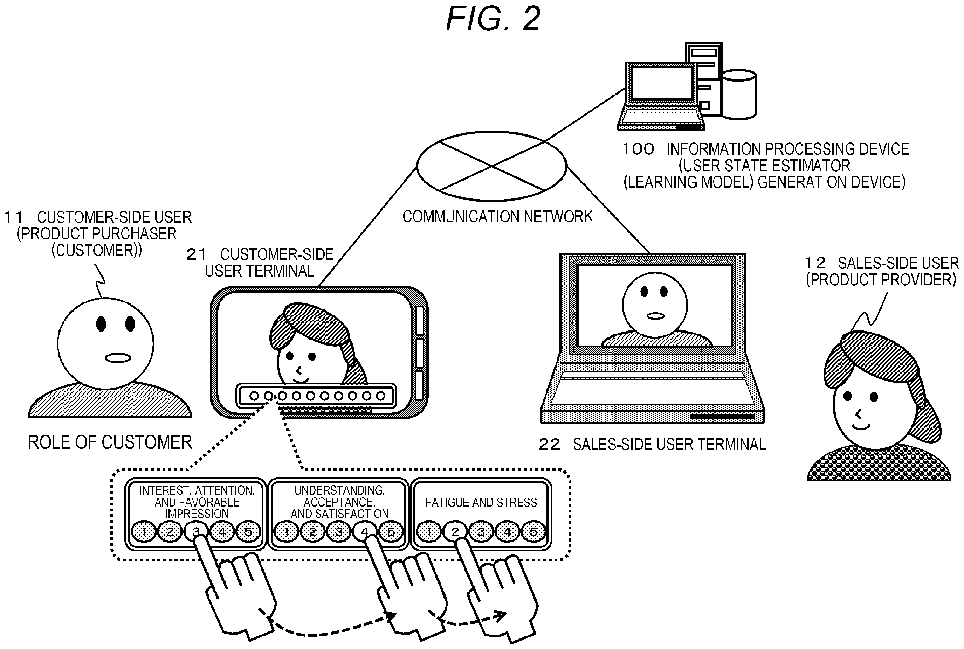

First, with reference to Fig. 2, an overview of (Process 1) described above will be described, that is,
(Process 1) A process of generating a user state estimator (learning model) configured to estimate a user state such as emotion of a user participating in a remote meeting via a communication network on the basis of an image, voice, and the like,
an overview of this "(Process 1) user state estimator (learning model) generation processing" will be described.

Similarly to Fig. 1 described above, Fig. 2 illustrates the customer-side user 11 who is a customer who is a potential purchaser and the sales-side user 12 as a product provider.

The customer-side user terminal 21 such as a smartphone and the sales-side user terminal 22 such as a PC are connected via a communication network, and communicates with each other by mutually transmitting and receiving voice and images to conduct a business talk.

However, in a case of executing "(Process 1) user state estimator (learning model) generation processing", the customer-side user 11 is not an actual customer but a person who plays the role of a customer.

For example, a person such as an employee of the same company as the sales-side user 12 (an employee of a condominium vendor) or a part-timer plays the role of a customer.

The sales-side user 12 progresses a simulated business talk via a network with the customer-side user 11 playing the role of a customer.

The customer-side user 11 playing the role of a customer inputs a user state such as own emotion to the customer-side user terminal 21 as needed, during the execution of the simulated business talk. Examples of the input items include the following three user states as illustrated in Fig. 2:
(user state 1) interest, attention, and favorable impression;
(user state 2) understanding, acceptance, and satisfaction; and
(user state 3) fatigue and stress.

(User state 1) interest, attention, and favorable impression indicates a user state as to whether or not the customer-side user 11 shows an interest in, pays attention to, and has a favorable impression of the explanation and talk made by the sales-side user 12.

During the meeting (business talk) with the sales-side user 12, the customer-side user 11 playing the role of a customer determines his/her interest, attention, and favorable impression level, and inputs a score (evaluation value) based on the determination as needed.

The score (evaluation value) is determined in five stages of 1 to 5, and the higher the interest, attention, and favorable impression, the higher the score (evaluation value).

In a case where the customer-side user 11 playing the role of a customer feels that the level of "interest, attention, and favorable impression" for the explanation and talk made by the sales-side user 12 is equal to the maximum level, the score = 5 is input at that timing.

The display of the customer-side user terminal 21 is a touch panel, and the customer-side user 11 inputs the score = 5 to the display.

On the other hand, in a case where the customer-side user 11 playing the role of a customer feels that the level of "interest, attention, and favorable impression" for the explanation and talk made by the sales-side user 12 is equal to the minimum level, the score = 1 is input at that timing.

The customer-side user 11 playing the role of a customer inputs, within the meeting (business talk) period with the sales-side user 12, the score (evaluation value) as needed and at any timing when the customer-side user 11 feels that the level of "interest, attention, and favorable impression" has changed.

(User state 2) understanding, acceptance, and satisfaction indicates a user state as to whether or not the customer-side user 11 shows understanding of, acceptance of, and satisfaction with the explanation made by the sales-side user 12.

The customer-side user 11 playing the role of a customer inputs a score (evaluation value) as needed during the meeting (business talk) with the sales-side user 12.

In a case where the customer-side user 11 playing the role of a customer feels that the level of "understanding, acceptance, and satisfaction" for the explanation made by the sales-side user 12 is equal to the maximum level, the customer-side user 11 inputs the score = 5 at that timing, and in a case where the customer-side user 11 feels that the level is equal to the minimum level, the customer-side user 11 inputs the score = 1 at that timing.

The customer-side user 11 playing the role of a customer inputs, within the meeting (business talk) period with the sales-side user 12, the score (evaluation value) as needed and at any timing when the customer-side user 11 feels that the level of "understanding, acceptance, and satisfaction" has changed.

(User state 3) fatigue and stress indicates a user state as to whether or not the customer-side user 11 feels fatigue and stress from the explanation and talk made by the sales-side user 12.

The customer-side user 11 playing the role of a customer inputs a score (evaluation value) as needed during the meeting (business talk) with the sales-side user 12.

In a case where the customer-side user 11 playing the role of a customer feels that the level of "fatigue and stress" for the explanation and talk made by the sales-side user 12 is equal to the maximum level (tired or under strong stress), the score = 5 is input at that timing, and in a case where the customer-side user 11 feels that the level is equal to the minimum level (not tired or relaxed), the score = 1 is input at that timing.

The customer-side user 11 playing the role of a customer inputs, within the meeting (business talk) period with the sales-side user 12, the score (evaluation value) as needed and at any timing when the customer-side user 11 feels that the level of "fatigue and stress" has changed.

The scores (evaluation values) of the following three user states input by the customer-side user 11 playing the role of a customer:
(user state 1) interest, attention, and favorable impression;
(user state 2) understanding, acceptance, and satisfaction; and
(user state 3) fatigue and stress.
are transmitted from the customer-side user terminal 21 to the information processing device 100 together with a time stamp indicating a score (evaluation value) input timing.

The information processing device 100 further receives the input of the image and voice of each user during the meeting period via the customer-side user terminal 21 and the sales-side user terminal 22.

The information processing device 100 receives the input of each piece of the following data during the meeting period:
(A) an image and voice of the customer-side user 11 from the customer-side user terminal 21; and
(B) an image and voice of the sales-side user 12 from the sales-side user terminal 22; and
(C) a score (evaluation value) data string of the above-described (user states 1 to 3) from the customer-side user terminal 21.

The information processing device 100 receives the input of the above-described data (A) to (C) during the meeting period, and performs learning processing using the input data to generate a user state estimator (learning model).

Details of the user state estimator (learning model) generation processing will be described later.

The user state estimator (learning model) generated by the information processing device 100 is used in an actual meeting such as a business talk with a customer.

That is, the user state estimator (learning model) is used in (Process 2) described above, that is, "(Process 2) a process of estimating user emotion by using the generated user state estimator (learning model)".

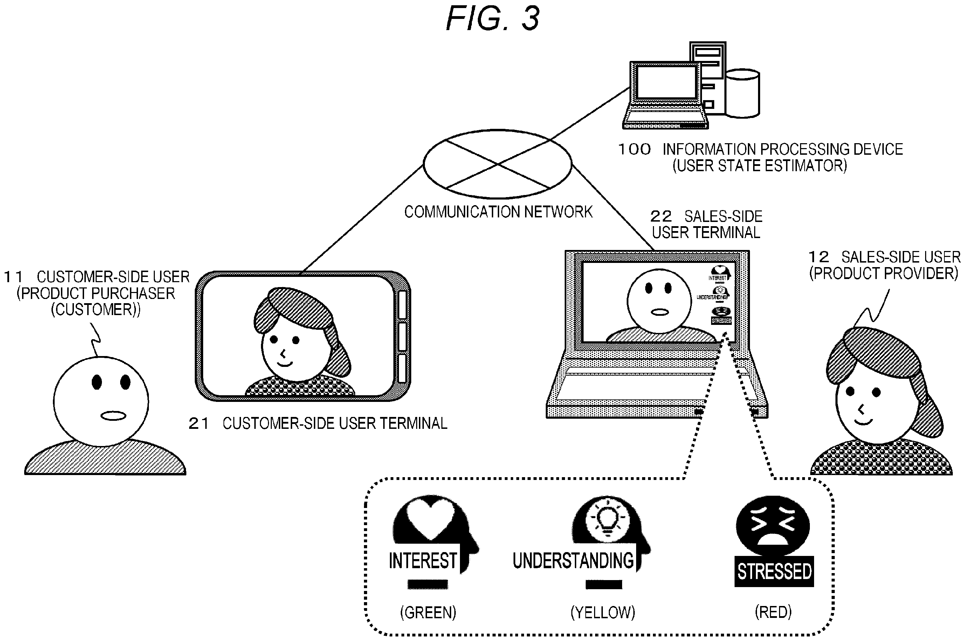

An example of use of the user state estimator (learning model) will be described with reference to Fig. 3.

Similar to Figs. 1 and 2, Fig. 3 illustrates the customer-side user 11 who is a customer as a potential purchaser and the sales-side user 12 as a product provider.

The customer-side user terminal 21 such as a smartphone and the sales-side user terminal 22 such as a PC are connected via a communication network, and communicates with each other by mutually transmitting and receiving voice and images to conduct a meeting such as a business talk.

In the configuration illustrated in Fig. 3, the customer-side user 11 is an actual customer, and an actual business talk is held instead of the simulated business talk.

The information processing device 100 inputs each piece of the following data via the communication network during a meeting period between the customer-side user 11 and the sales-side user 21.
(A) Image and voice of the customer-side user 11 from the customer-side user terminal 21
(B) Image and voice of the sales-side user 12 from the sales-side user terminal 22

The information processing device 100 inputs the data (A) and (B) to the user state estimator (learning model) generated in the previous learning processing.

The user state estimator (learning model) estimates the user state on the basis of the input image and voice data.

That is, the user state is estimated on the basis of at least one of image data or voice data of each user participating in the meeting via the communication network.

The user state estimated by the user state estimator (learning model) is an estimation score of each of the following three user states of the customer-side user 11:
(user state 1) interest, attention, and favorable impression;
(user state 2) understanding, acceptance, and satisfaction; and
(user state 3) fatigue and stress.

The information processing device 100 transmits, to the sales-side user terminal 22, an identification icon according to the score of the above-described (user states 1 to 3) indicating the user state of the customer-side user 11 estimated by the user state estimator (learning model), to display the identification icon.

The example illustrated in the figure is an example in which identification icons corresponding to the following score values are displayed on the sales-side user terminal 22:
(user state 1) interest, attention, and favorable impression score = 5;
(user state 2) understanding, acceptance, and satisfaction score = 3; and
(user state 3) fatigue and stress score = 5.

Note that the identification icons are displayed in color, for example.

The identification icon (interest (green)) corresponding to (user state 1) interest, attention, and favorable impression score = 5 is a green identification icon. This is an identification icon indicating that the "interest, attention, and favorable impression" level of the customer-side user 11 for the explanation and talk of the sales-side user 12 is the highest level (a degree of interest, attention, and favorable impression is high).

The identification icon (understanding (yellow)) corresponding to (user state 2) understanding, acceptance, and satisfaction score = 3 is a yellow identification icon. This is an identification icon indicating that the "understanding, acceptance, and satisfaction" level of the customer-side user 11 for the explanation and talk of the sales-side user 12 is an intermediate level (a degree of understanding, acceptance, and satisfaction is average).

The identification icon (stress (red)) corresponding to (user state 3) fatigue and stress score = 5 is a red identification icon. This indicates that the "fatigue and stress" level of the customer-side user 11 for the explanation and talk of the sales-side user 12 is the highest level (a degree of fatigue and stress is high).

The sales-side user 12 can grasp a state of the customer side by viewing these identification icons displayed on the sales-side user terminal 22, and can take an optimal measure such as changing the way of the explanation and contents in accordance with the grasped result.

Note that, in Figs. 1 to 3, an example has been described in which the device configured to execute the processing of generating the user state estimator (learning model) and the user state estimation processing using the generated user state estimator (learning model) is the information processing device 100 on the cloud.

This processing is not limited to processing performed by the device on the cloud, and may be performed using, for example, the sales-side user terminal 22.

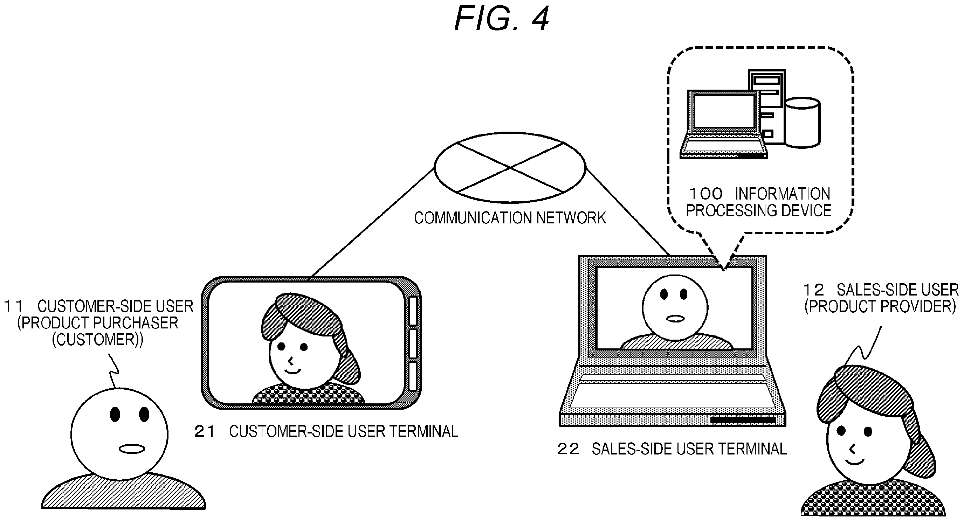

As illustrated in Fig. 4, the sales-side user terminal 22 executes the processing of generating the user state estimator (learning model) and the user state estimation processing using the generated user state estimator (learning model). That is, the processing performed by the information processing device 100 described with reference to Figs. 1 to 3 may be performed by the sales-side user terminal 22.

### [2. Sequence of processing of generating user state estimator (learning model)]

Next, a sequence of processing of generating the user state estimator (learning model) will be described.

As described with reference to Fig. 2, the information processing device 100 executes the processing of generating the user state estimator (learning model).

The information processing device 100 receives the input of each piece of the following data during the meeting period, that is, the following data (A) to (C):
(A) an image and voice of the customer-side user 11 from the customer-side user terminal 21;
(B) an image and voice of the sales-side user 12 from the sales-side user terminal 22; and
(C) a score (evaluation value) data string of the above-described (user states 1 to 3) from the customer-side user terminal 21.
and performs learning processing using the input data to generate the user state estimator (learning model).

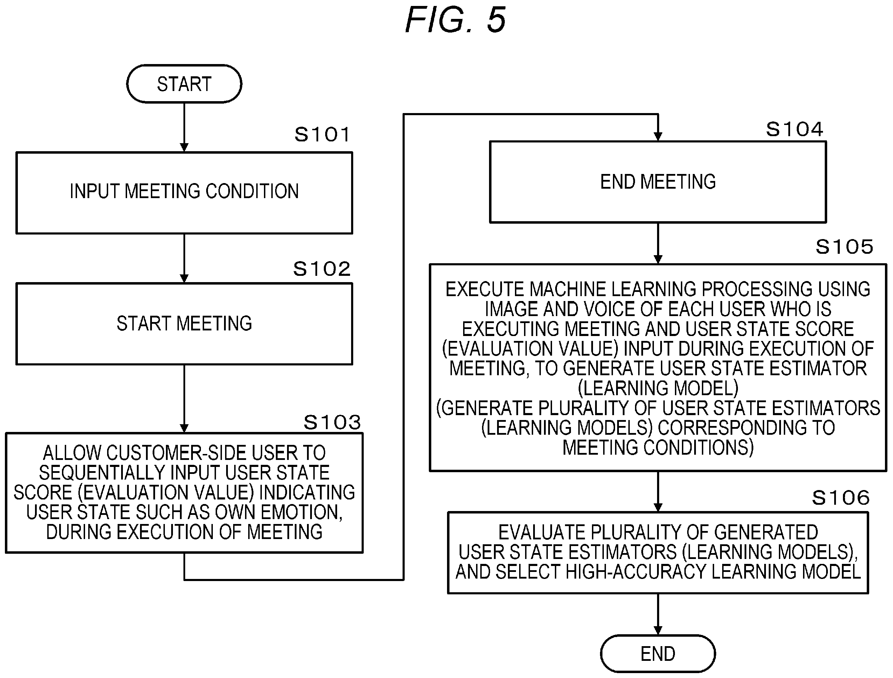

With reference to Fig. 5 and subsequent figures, a sequence of the user state estimator (learning model) generation processing executed by the information processing device 100 will be described.

Fig. 5 is a flowchart for describing a sequence of the user state estimator (learning model) generation processing executed by the information processing device 100.

Note that, as described above with reference to Fig. 2, in a case of executing the processing of generating the user state estimator (learning model), the customer-side user 11 performs processing using a person who plays the role of a customer, instead of an actual customer.

The sales-side user 12 performs a meeting such as a simulated business talk via a network with the customer-side user 11 playing the role of a customer.

Hereinafter, processing of each step of the flowchart illustrated in Fig. 5 will be sequentially described.

### (Step S101)

First, in step S101, a meeting condition (MTG tag) is input.

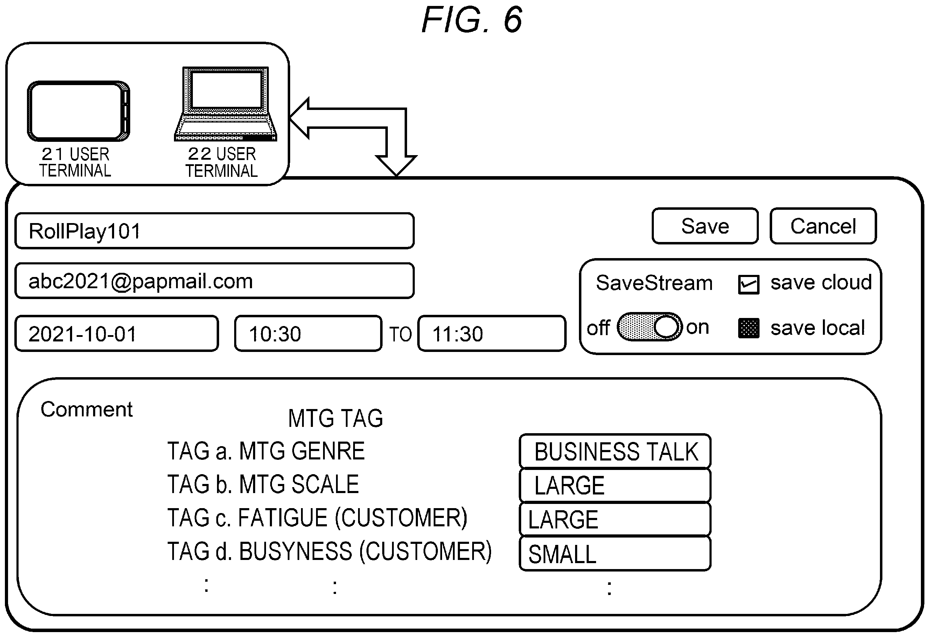

With reference to Fig. 6, a specific example of meeting condition (MTG tag) input processing in step S101 will be described.

Fig. 6 illustrates an example of an initial setting screen displayed on display units of the customer-side user terminal 12 and the sales-side user terminal 22 when the processing of generating the user state estimator (learning model) is executed.

The customer-side user 11 playing the role of a customer and the sales-side user 12 input meeting conditions (MTG tags) in a comment field of the initial setting screen illustrated in Fig. 6. The following meeting conditions (MTG tags) are individually input.
(Tag a) meeting (MTG) genre
(Tag b) meeting (MTG) scale
(Tag c) fatigue (customer)
(Tag d) busyness (customer)

In the "(tag a) meeting (MTG) genre", data indicating a genre of the meeting, for example, a type of the meeting such as "business talk", "external meeting", "internal meeting", "explanatory meeting", "interview", and "class" is input.

In the (tag b) meeting (MTG) scale, a scale of the meeting is input. For example, "large" is input when the number of participants is 10 or more, "medium" is input when the number of participants is 5 to 9, and "small" is input when the number of participants is 4 or less.

Note that the tag may be set in two categories of large and small other than the three categories of large, medium, and small, and it is preferable to set the tags in accordance with a predefined tag setting rule.

In the (tag c) fatigue (customer) and (tag d) busyness (customer), a fatigue level and a busyness level of the customer-side user 11 at the start of the meeting are input.

These tags c and d may also be set in two categories of large and small other than the three categories of large, medium, and small, and it is preferable to set tags in accordance with a predefined tag setting rule.

Note that the tags a to b are input by the sales-side user 12, and the tags c to d are input by the customer-side user 11 playing the role of a customer.

The sales-side user 12 may ask about a state of the customer-side user 11 playing the role of a customer, and the sales-side user 12 may enter all tags a to d.

Note that the above-described meeting conditions (MTG tags) a to d are merely examples of settable meeting conditions, and not all these condition settings are essential. Only any of the conditions may be used, or a meeting condition other than the above-described conditions may be set.

The input meeting conditions (MTG tags) are transmitted from the customer-side user terminal 12 or the sales-side user terminal 22 to the information processing device 100, and stored in a storage unit of the information processing device 100.

### (Step S102)

Next, in step S102 of the flow illustrated in Fig. 5, the meeting is started.

As described above with reference to Fig. 2, the customer-side user 11 playing the role of a customer and the sales-side user 12 start a meeting such as a simulated business talk via the network.

### (Step S103)

After the meeting is started, the customer-side user 11 sequentially inputs a user state score (evaluation value) indicating a user state such as user's own emotion in step S103.

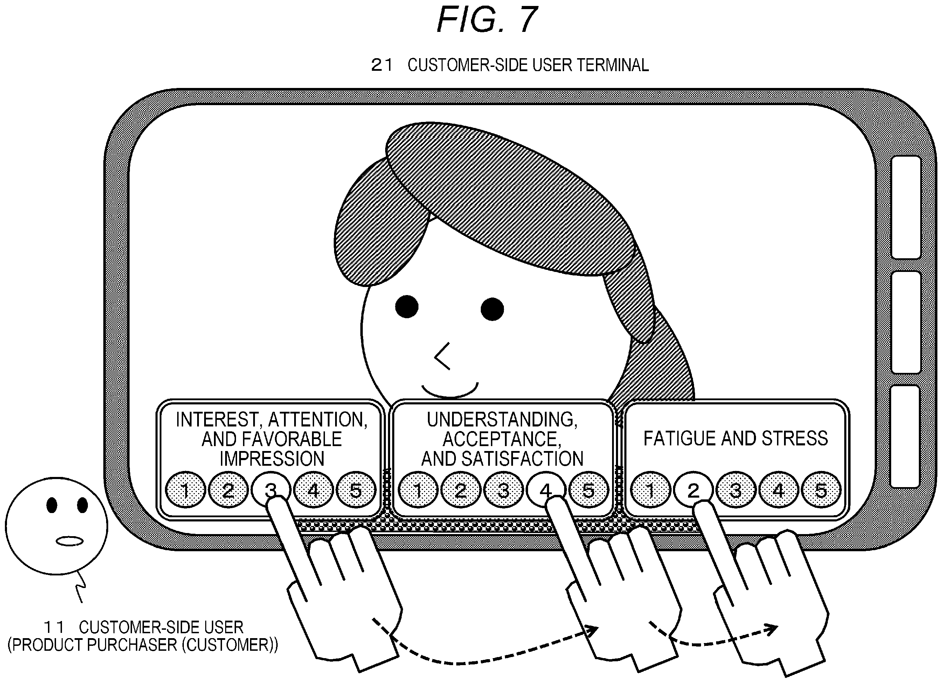

A specific example of this processing will be described with reference to Fig. 7.

Fig. 7 illustrates an example of a display image of the customer-side user terminal 21 during execution of a meeting.

A face image of the sales-side user 21 who is the other party of the meeting is displayed on the customer-side user terminal 21.

As illustrated in the figure, an UI for inputting the user state score (evaluation value) is further displayed on the customer-side user terminal 21.

The customer-side user 11 playing the role of a customer can input a state such as own emotion during the meeting execution period at any time via the UI.

The input items are the following three user states described above with reference to Fig. 2:
(user state 1) interest, attention, and favorable impression;
(user state 2) understanding, acceptance, and satisfaction; and
(user state 3) fatigue and stress.

(User state 1) interest, attention, and favorable impression indicates a user state as to whether or not the customer-side user 11 shows an interest in, pays attention to, and has a favorable impression of the explanation and talk made by the sales-side user 12.

(User state 2) understanding, acceptance, and satisfaction indicates a user state as to whether or not the customer-side user 11 shows understanding of, acceptance of, and satisfaction with the explanation made by the sales-side user 12.

(User state 3) fatigue and stress indicates a user state as to whether or not the customer-side user 11 feels fatigue and stress from the explanation and talk made by the sales-side user 12.

The customer-side user 11 playing the role of a customer inputs the scores (evaluation values) of these three types of user states as needed during execution of a meeting (business talk) with the sales-side user 12.

As described above, the score (evaluation value) has five stages of 1 to 5.

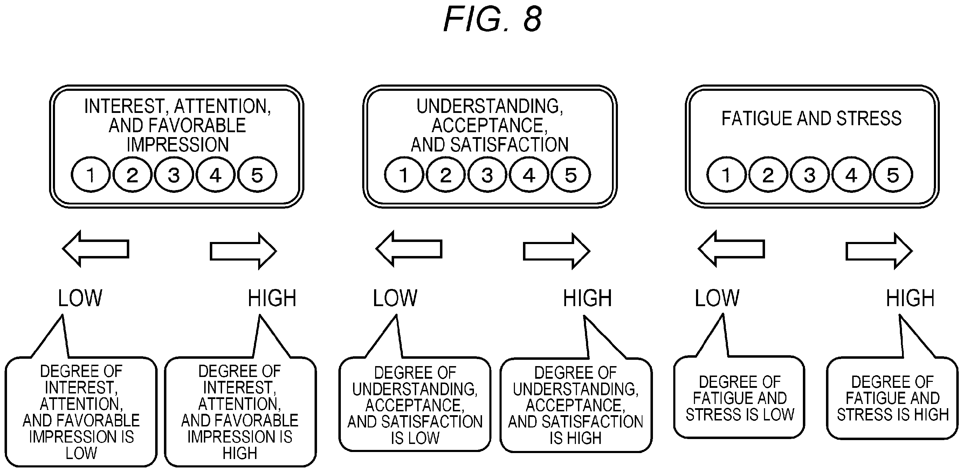

Fig. 8 illustrates a setting example of the scores (evaluation values) = 1 to 5 of (user states 1 to 3).

The customer-side user 11 playing the role of a customer performs score (evaluation value) input processing below.

In the scores (evaluation values) of (user state 1) interest, attention, and favorable impression, a score (evaluation value) that is higher (closer to 5) is input as the interest, attention, and favorable impression level of the customer-side user 11 for the explanation and talk of the sales-side user 12 is higher, while the score (evaluation value) that is lower (closer to 1) is input as the interest, attention, and favorable impression level is lower.

In the score (evaluation value) of (user state 2) understanding, acceptance, and satisfaction, a score (evaluation value) that is higher (closer to 5) is input as the understanding, acceptance, and satisfaction level of the customer-side user 11 for the explanation and talk of the sales-side user 12 is higher, while the score (evaluation value) that is lower (closer to 1) is input as the understanding, acceptance, and satisfaction level is lower.

In the score (evaluation value) of (user state 3) fatigue and stress, a score (evaluation value) that is higher (closer to 5) is input as the fatigue and stress level of the customer-side user 11 for the explanation and talk of the sales-side user 12 is higher, while the score (evaluation value) that is lower (closer to 1) is input as the fatigue and stress level is lower.

The customer-side user 11 playing the role of a customer inputs the score (evaluation value) at any time during a period of the meeting with the sales-side user 12 at any timing when it is determined that a level change of the above-described (user states 1 to 3) has occurred.

The scores (evaluation values) of the following three user states input by the customer-side user 11 playing the role of a customer:
(user state 1) interest, attention, and favorable impression;
(user state 2) understanding, acceptance, and satisfaction; and
(user state 3) fatigue and stress.
are transmitted from the customer-side user terminal 21 to the information processing device 100 together with a time stamp indicating a score (evaluation value) input timing.

The information processing device 100 further receives the input of the image and voice of each user during the meeting period via the customer-side user terminal 21 and the sales-side user terminal 22.

### (Step S104)

Next, in step S104 of the flow illustrated in Fig. 5, the meeting ends.

### (Step S105)

When the meeting ends, in step S105, the information processing device 100 executes machine learning processing using the image and voice of each user who is executing the meeting and the user state score (evaluation value) input during the meeting.

As a processing result of the machine learning processing, a user state estimator (learning model) is generated. For example, a plurality of user state estimators (learning models) corresponding to the meeting condition is generated.

Details of the processing of generating the user state estimator (learning model) by the learning processing in step S105 will be described in a subsequent stage (next item).

### (Step S106)

Moreover, in step S106, the information processing device executes processing of selecting a user state estimator (learning model) on which estimation processing with higher accuracy is executed, from the plurality of user state estimators (learning models) generated in step S105 and corresponding to the meeting condition.

For example, processing of selecting a user state estimator (learning model) capable of executing high-accuracy estimation processing corresponding to each of various meeting conditions is executed.

Details of the processing in step S106 will also be described later.

### [3. Details of user state estimator (learning model) generation processing executed by information processing device]

Next, details of the user state estimator (learning model) generation processing executed by the information processing device will be described.

The processing described below is machine learning processing for generating the user state estimator (learning model) executed by the information processing device 100 in (step S105) of the flowchart described with reference to Fig. 5.

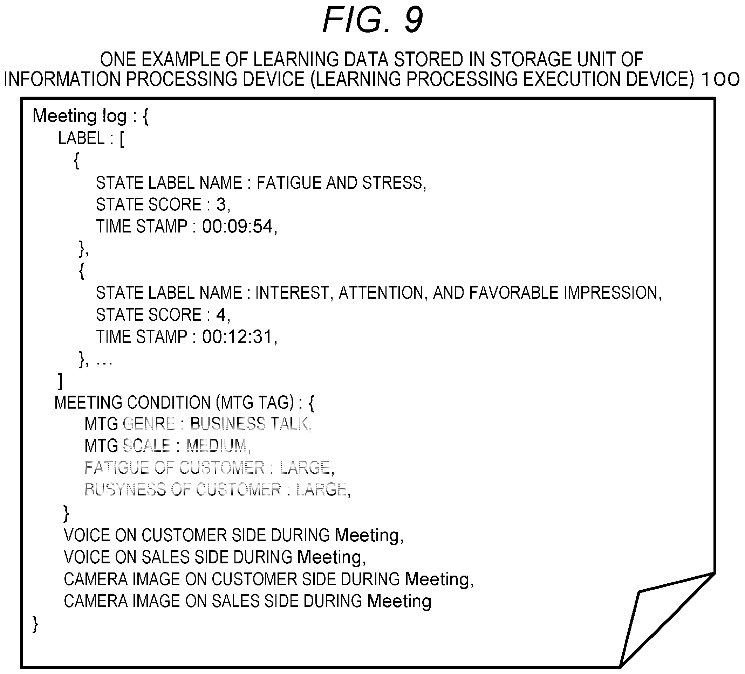

With reference to Fig. 9 and subsequent figures, details of the machine learning processing for generating the user state estimator (learning model) executed by the information processing device 100 in (step S105) will be described.

During the execution period of the meeting by the communication processing between the customer-side user terminal 21 and the sales-side user terminal 22, the information processing device 100 inputs each piece of the following data from these two communication terminals;
(A) an image and voice of the customer-side user 11 from the customer-side user terminal 21;
(B) Image and voice of the sales-side user 12 from the sales-side user terminal 22
(C) a score (evaluation value) data string of (user states 1 to 3) from the customer-side user terminal 21.

The score (evaluation value) of (user states 1 to 3) in (C) described above is a score (evaluation value) of each of the following three user states:
(user state 1) interest, attention, and favorable impression;
(user state 2) understanding, acceptance, and satisfaction; and
(user state 3) fatigue and stress.

These user state scores (evaluation values) are transmitted from the customer-side user terminal 21 to the information processing device 100 together with a time stamp indicating a score (evaluation value) input timing.

The information processing device 100 further receives the input of the image and voice of each user during the meeting period via the customer-side user terminal 21 and the sales-side user terminal 22.

Fig. 9 is data input from the customer-side user terminal 21 and the sales-side user terminal 22 to the information processing device 100, and is a data example indicating a part of data (meeting log) used for machine learning processing performed by the information processing device 100.

A recording area [label] at the top of the log data (meeting log) illustrated in Fig. 9 is a recording area for the score (evaluation value) of the user state input by the customer-side user 11 playing the role of a customer during the meeting.

In the [label] recording area, the scores (evaluation values) of the following three user states input by the customer-side user 11 playing the role of a customer during the meeting:
(user state 1) interest, attention, and favorable impression;
(user state 2) understanding, acceptance, and satisfaction; and
(user state 3) fatigue and stress
are recorded together with a state label name indicating a user state type and a time stamp indicating a score (evaluation value) setting timing.

The next recording area [meeting condition (MTG tag)] is a recording area of a meeting condition set before the start of the meeting described above with reference to Fig. 6.

Moreover, recording areas for the image and voice of each user during the meeting period, that is, the image and voice of the customer-side user 11 and the image and voice of the sales-side user 12 are set at the end.

The information processing device 100 receives the input of the log data (meeting Log) containing such pieces of data from at least one of the customer-side user terminal 21 or the sales-side user terminal 22, and performs machine learning processing using the input data to generate a user state estimator (learning model).

Note that the log data illustrated in Fig. 9 is part of the log data acquired during the meeting period. It is possible to generate, by using the data of [label] acquired as log data during one meeting period, time-series data of the user state score (evaluation value) sequentially input by the customer-side user 11 during the meeting.

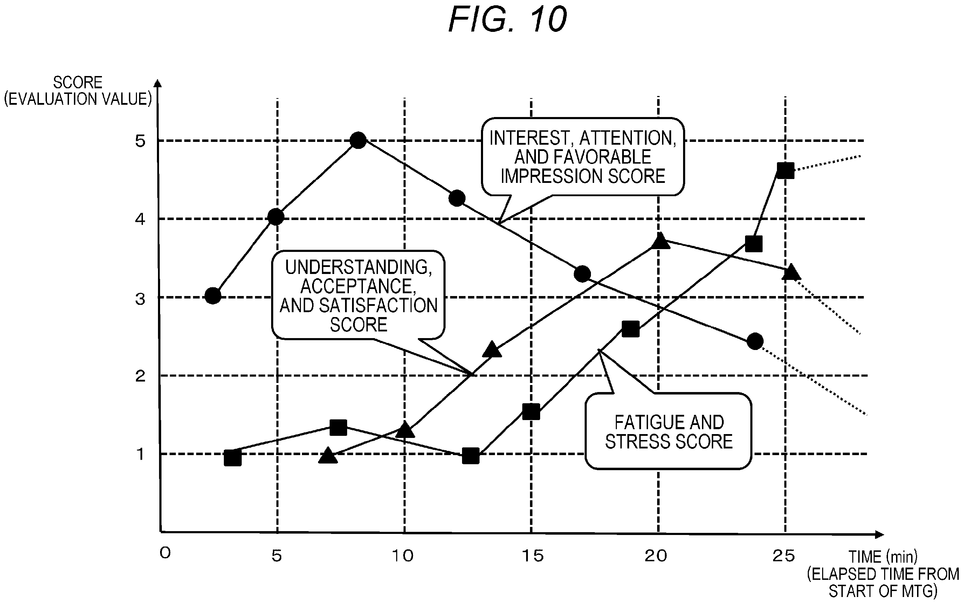

Fig. 10 illustrates an example of time-series data that can be generated on the basis of the user state score (evaluation value) acquired by the information processing device 100 from the customer-side user terminal 21.

Fig. 10 illustrates time-series data of each of the following user states:
(user state 1) interest, attention, and favorable impression;
(user state 2) understanding, acceptance, and satisfaction; and
(user state 3) fatigue and stress.

For example, it is possible to analyze, by analyzing the time-series data, a change in the state of the customer-side user terminal 21 in detail during the meeting period.

The information processing device 100 executes machine learning processing using the log data illustrated in Fig. 9 to generate a user state estimator (learning model).

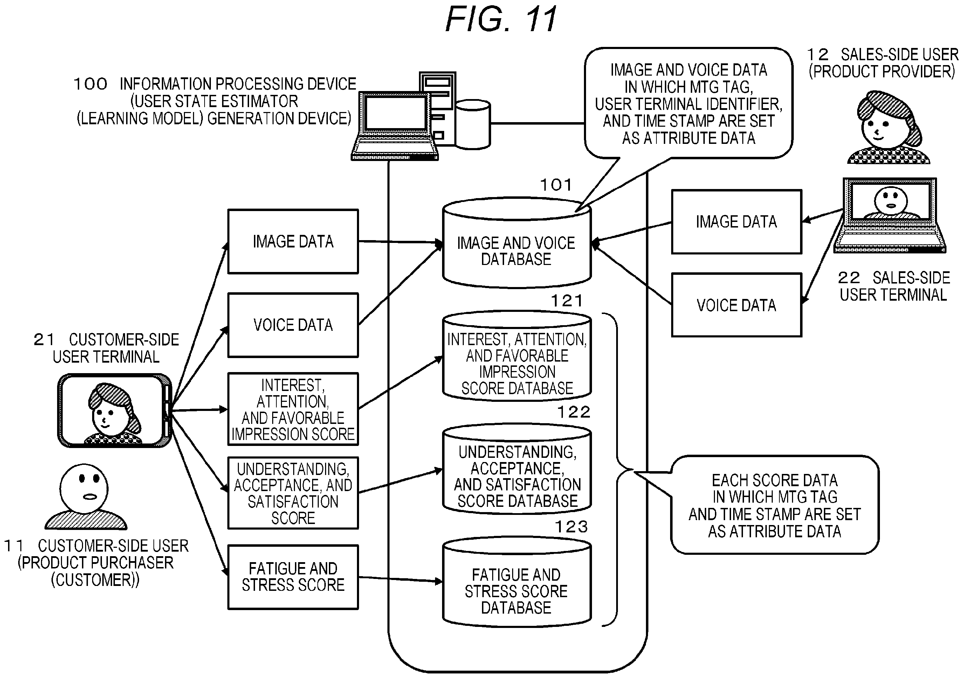

Details of the machine learning processing performed by the information processing device 100 will be described with reference to Fig. 11 and subsequent figures.

Fig. 11 is a diagram illustrating a configuration example of collecting data used for the machine learning processing performed by the information processing device 100.

As illustrated in Fig. 11, the information processing device 100 acquires each piece of the following data from the customer-side user terminal 21 during the meeting period:
image data; and
voice data;
(score corresponding to user state 1) = interest, attention, and favorable impression score;
(score corresponding to user state 2) = understanding, acceptance, and satisfaction score; and
(score corresponding to user state 3) = fatigue and stress score.

The image data and the voice data are image data containing the face image of the customer-side user 11 and the utterance voice data of the customer-side user 11 acquired by the camera and the microphone of the customer-side user terminal 21.

(score corresponding to user state 1) = interest, attention, and favorable impression score;
(score corresponding to user state 2) = understanding, acceptance, and satisfaction score; and
(score corresponding to user state 3) = fatigue and stress score.
these pieces of score data are, as described above with reference to Fig. 10, time-series data of the user state score (evaluation value) input by the customer-side user 11 to the customer-side user terminal 21 during the meeting period.

The information processing device 100 stores these pieces of data in a storage unit (database) provided in the information processing device 100.

As illustrated in Fig. 11, the image data and the voice data are stored in an image and voice database 101.

The interest, attention, and favorable impression score is stored in an interest, attention, and favorable impression score database 121, the understanding, acceptance, and satisfaction score is stored in an understanding, acceptance, and satisfaction score database 122, and the fatigue and stress score is stored in a fatigue and stress score database 123.

Moreover, the information processing device 100 acquires, in a similar manner, each piece of the following data from the sales-side user terminal 22 during the meeting period:
image data; and
voice data;

These image data and voice data are image data containing the face image of the sales-side user 12 and the utterance voice data of the sales-side user 12 acquired by the camera and the microphone of the sales-side user terminal 22.

These pieces of data are also recorded in the image and voice database 101 of the information processing device 100.

Note that the image and voice data recorded in the image and voice database 101 contain, as attribute information, recording time information such as a time stamp indicating the acquisition time of image and voice, user identification information for identifying whether the image and the voice are data of the customer-side user 11 acquired from the customer-side user terminal 21 or data of the sales-side user 12 acquired from the sales-side user terminal 22, and the like.

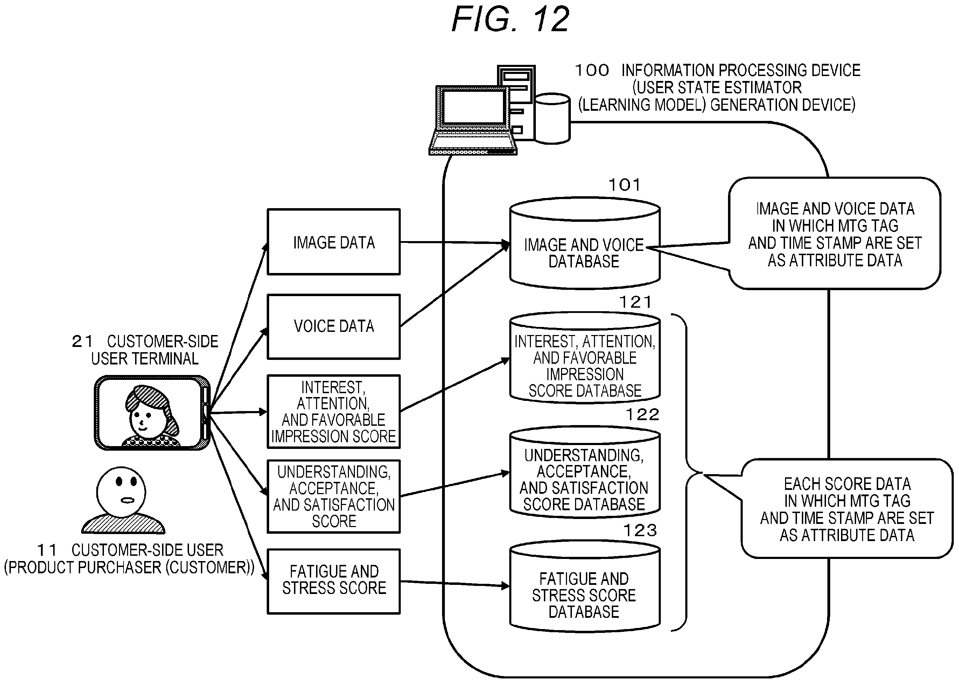

Note that, the example of how the information processing device 100 collects learning data illustrated in Fig. 11 is a configuration example where the image data and the voice data during the meeting period are acquired also from the sales-side user terminal 22; however, for example, as illustrated in Fig. 12, it is also possible to acquire the image, the voice, and each user state score only from the customer-side user terminal 21 without acquiring the image data and the voice data from the sales-side user terminal 22, and apply them to the learning processing.

Hereinafter, as illustrated in Fig. 11, a processing example of acquiring data during the meeting period from both the customer-side user terminal 21 and the sales-side user terminal 22 and performing learning processing will be described.

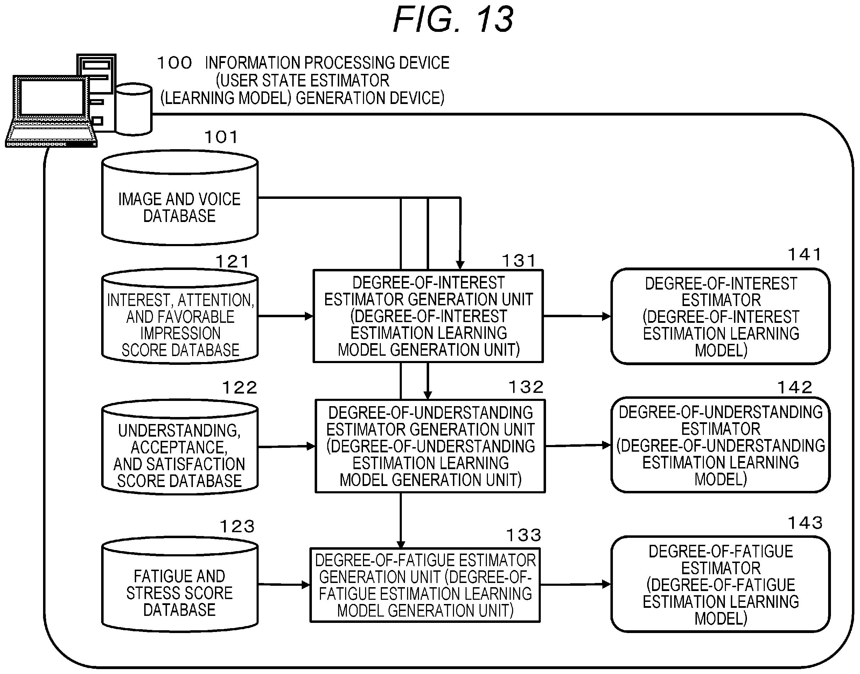

Fig. 13 is a diagram for describing a configuration and processing of machine learning processing performed by the information processing device 100.

As illustrated in Fig. 13, the information processing device 100 includes a degree-of-interest estimator generation unit (degree-of-interest estimation learning model generation unit) 131, a degree-of-understanding estimator generation unit (degree-of-understanding estimation learning model generation unit) 132, and a degree-of-fatigue estimator generation unit (degree-of-fatigue estimation learning model generation unit) 133.

The degree-of-interest estimator generation unit (degree-of-interest estimation learning model generation unit) 131 performs machine learning processing using the data stored in an interest, attention, and favorable impression score database 121 and the data stored in the image and voice database 101 to generate a degree-of-interest estimator (degree-of-interest estimation learning model) 141.

That is, the degree-of-interest estimator generation unit (degree-of-interest estimation learning model generation unit) 131 performs machine learning processing using each piece of the following data to generate the degree-of-interest estimator (degree-of-interest estimation learning model) 141:
(a) an image and voice of the customer-side user 11 and the image and voice of the sales-side user 12 during the meeting period; and
(b) an interest, attention, and favorable impression score (evaluation value) input by the customer-side user 11 during the meeting period.

Furthermore, the degree-of-understanding estimator generation unit (degree-of-understanding estimation learning model generation unit) 132 performs machine learning processing using the data stored in the understanding, acceptance, and satisfaction score database 122 and the data stored in the image and voice database 101 to generate a degree-of-understanding estimator (degree-of-understanding estimation learning model) 142.

That is, the degree-of-understanding estimator generation unit (degree-of-understanding estimation learning model generation unit) 132 performs machine learning processing using each piece of the following data to generate the degree-of-understanding estimator (degree-of-understanding estimation learning model) 142:
(a) an image and voice of the customer-side user 11 and the image and voice of the sales-side user 12 during the meeting period; and
(b) an understanding, acceptance, and satisfaction score (evaluation value) input by the customer-side user 11 during the meeting period.

Moreover, the degree-of-fatigue estimator generation unit (degree-of-fatigue estimation learning model generation unit) 133 performs machine learning processing using the data stored in the fatigue and stress score database 123 and the data stored in the image and voice database 101 to generate a degree-of-fatigue estimator (degree-of-fatigue estimation learning model) 143.

That is, the degree-of-fatigue estimator generation unit (degree-of-fatigue estimation learning model generation unit) 133 performs machine learning processing using each piece of the following data to generate the degree-of-fatigue estimator (degree-of-fatigue estimation learning model) 143:
(a) an image and voice of the customer-side user 11 and the image and voice of the sales-side user 12 during the meeting period; and
(b) a fatigue and stress score (evaluation value) input by the customer-side user 11 during the meeting period.

Note that the learning processing units of the information processing device 100, that is, the degree-of-interest estimator generation unit (degree-of-interest estimation learning model generation unit) 131, the degree-of-understanding estimator generation unit (degree-of-understanding estimation learning model generation unit) 132, and the degree-of-fatigue estimator generation unit (degree-of-fatigue estimation learning model generation unit) 133 perform deep learning processing as the machine learning processing, for example.

For example, the degree-of-interest estimator generation unit (degree-of-interest estimation learning model generation unit) 131 performs "supervised learning processing" in which the data stored in the interest, attention, and favorable impression score database 121 and the data stored in the image and voice database 101 are used as training data.

Through this learning processing, the degree-of-interest estimator (degree-of-interest estimation learning model) 141 configured to estimate the interest, attention, and favorable impression score of the customer-side user on the basis of at least one of the image and voice data of the customer-side user or the image and voice data of the sales-side user is generated.

Furthermore, the degree-of-understanding estimator generation unit (degree-of-understanding estimation learning model generation unit) 132 performs "supervised learning processing" in which the data stored in the understanding, acceptance, and satisfaction score database 122 and the data stored in the image and voice database 101 are used as training data.

Through this learning processing, the degree-of-understanding estimator (degree-of-understanding estimation learning model) 142 configured to estimate the understanding, acceptance, and satisfaction score of the customer-side user on the basis of at least one of the image and voice data of the customer-side user or the image and voice data of the sales-side user is generated.

Moreover, the degree-of-fatigue estimator generation unit (degree-of-fatigue estimation learning model generation unit) 133 performs "supervised learning processing" in which the data stored in the fatigue and stress score database 123 and the data stored in the image and voice database 101 are used as training data.

Through this learning processing, the degree-of-fatigue estimator (degree-of-fatigue estimation learning model) 143 configured to estimate the fatigue and stress score of the customer-side user on the basis of at least one of the image and voice data of the customer-side user or the image and voice data of the sales-side user is generated.

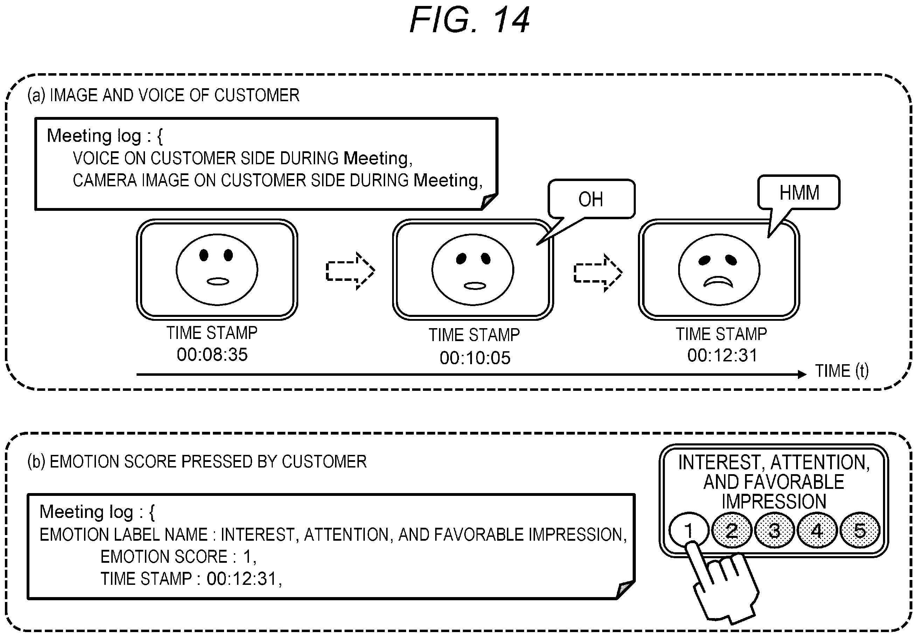

A specific example of the learning processing will be described with reference to Fig. 14 and subsequent figures.

Fig. 14 is a diagram for describing an example of learning processing for causing the degree-of-interest estimator generation unit (degree-of-interest estimation learning model generation unit) 131 to generate the degree-of-interest estimator (degree-of-interest estimation learning model) 141.

Fig. 14 illustrates each piece of the following data used as the learning data:
(a) an image and voice of the customer-side user 11 during the meeting period; and
(b) an interest, attention, and favorable impression score (evaluation value) input by the customer-side user 11 during the meeting period.

Note that, these are data included in the log data described above with reference to Fig. 9. That is, the log data is recorded in the customer-side user terminal 21 and transmitted to the information processing device 100 during the meeting.

The degree-of-interest estimator generation unit (degree-of-interest estimation learning model generation unit) 131 first acquires one interest, attention, and favorable impression score (evaluation value) input by the customer-side user 11 during the meeting period from the interest, attention, and favorable impression score database 121 illustrated in Fig. 13. Moreover, the time stamp of the acquired interest, attention, and favorable impression score (evaluation value) is checked, and image and voice data of the customer-side user 11 from the time matching the time stamp to a predetermined time before (for example, 30 seconds before) are acquired from the image and voice database 101.

The degree-of-interest estimator generation unit (degree-of-interest estimation learning model generation unit) 131 acquires the feature of the image and voice data of the customer-side user 11 acquired from the image and voice database 101, and associates the interest, attention, and favorable impression score (evaluation value) = 1 input by the customer-side user 11 illustrated in Fig. 14(b) with the feature.

That is, the learning processing is performed using a data set in which the image and voice data of the customer-side user 11 for 30 seconds immediately before the score input are associated with the interest, attention, and favorable impression score (evaluation value) input by the customer-side user 11 as training data.

The interest, attention, and favorable impression score (evaluation value) input by the customer-side user 11 is used as annotation data (ground truth metadata) for the image and voice data.

It is possible to generate, by performing such learning processing using a large number of data sets, the degree-of-interest estimator (degree-of-interest estimation learning model) 141 configured to estimate the interest, attention, and favorable impression score (evaluation value) of the customer-side user 11 on the basis of the image and voice data of the customer-side user 11 for a certain period (for example, 30 seconds).

In the example illustrated in Fig. 14, the image and voice of the customer-side user 11 immediately before the interest, attention, and favorable impression score (evaluation value) = 1 illustrated in Fig. 14(b) is input contain a perplexed face of the customer-side user 11 and voice data such as "Oh" and "Hmm".

For example, the degree-of-interest estimator generation unit (degree-of-interest estimation learning model generation unit) 131 can learn that, in a case where the image and voice of the customer-side user 11 contain such data, the value of the interest, attention, and favorable impression score (evaluation value) of the customer-side user 11 tends to be low.

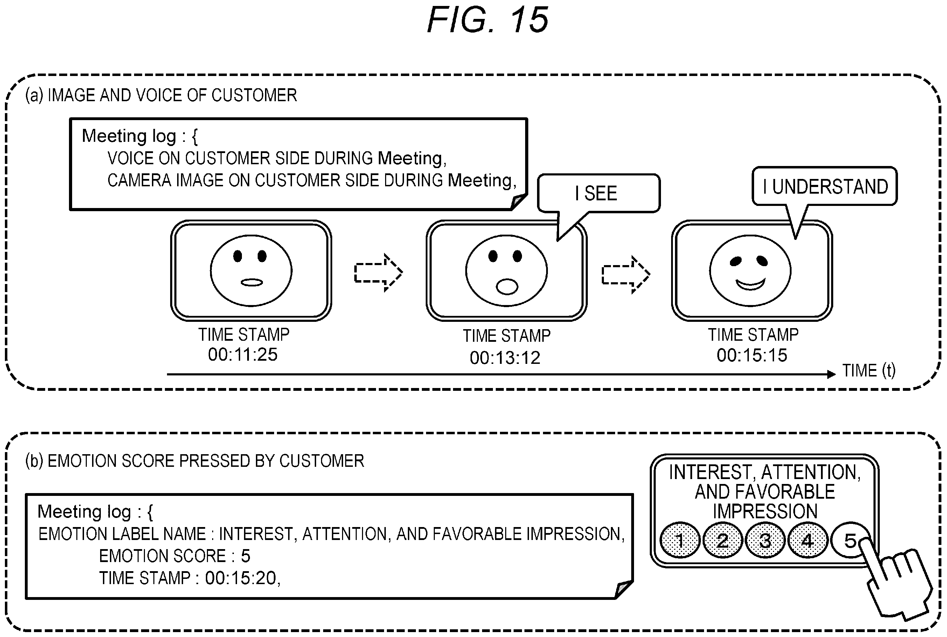

Fig. 15 illustrates an example of different learning data.

Fig. 15(b) illustrates the interest, attention, and favorable impression score (evaluation value) = 5 input by the customer-side user 11 during the meeting period from the interest, attention, and favorable impression score database 121.

Fig. 15(a) illustrates the image and voice data of the customer-side user 11 immediately before the input of the score = 5.

In Fig. 15(a), a satisfied face of the customer-side user 11 and voice data such as "I see", "I understand" are contained.

The degree-of-interest estimator generation unit (degree-of-interest estimation learning model generation unit) 131 can learn that, in a case where the image and voice of the customer-side user 11 contain such data, the value of the interest, attention, and favorable impression score (evaluation value) of the customer-side user 11 tends to be high.

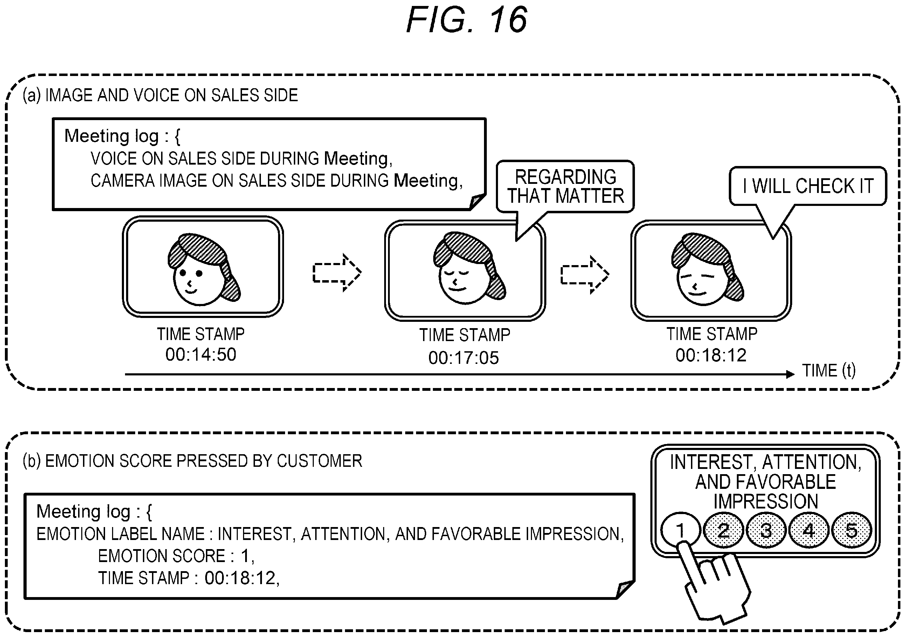

The example illustrated in Fig. 16 is an example of learning processing using the image and voice data of the sales-side user 12.

Fig. 16(b) illustrates the interest, attention, and favorable impression score (evaluation value) = 1 input by the customer-side user 11 during the meeting period from the interest, attention, and favorable impression score database 121.

Fig. 16(a) illustrates the image and voice data of the sales-side user 12 immediately before the input of the score = 1.

In Fig. 16(a), a troubled face of the sales-side user 12 and voice data such as "regarding the matter" and "I will check it" are contained.

The degree-of-interest estimator generation unit (degree-of-interest estimation learning model generation unit) 131 can learn that, in a case where the image and voice of the sales-side user 12 contain such data, the value of the interest, attention, and favorable impression score (evaluation value) of the customer-side user 11 tends to be low.

As described above, the degree-of-interest estimator generation unit (degree-of-interest estimation learning model generation unit) 131 receives the input of a large number of pieces of learning data containing the interest, attention, and favorable impression score (evaluation value) input by the customer-side user 11 during the meeting period and the image and voice data of at least one of the customer-side user 11 or the sales-side user 12, and performs the learning processing.

The degree-of-interest estimator generation unit (degree-of-interest estimation learning model generation unit) 131 generates, as a result of the learning processing, the degree-of-interest estimator (degree-of-interest estimation learning model) 141 configured to estimate the interest, attention, and favorable impression score of the customer-side user on the basis of at least one of the image and voice data of the customer-side user or the image and voice data of the sales-side user.

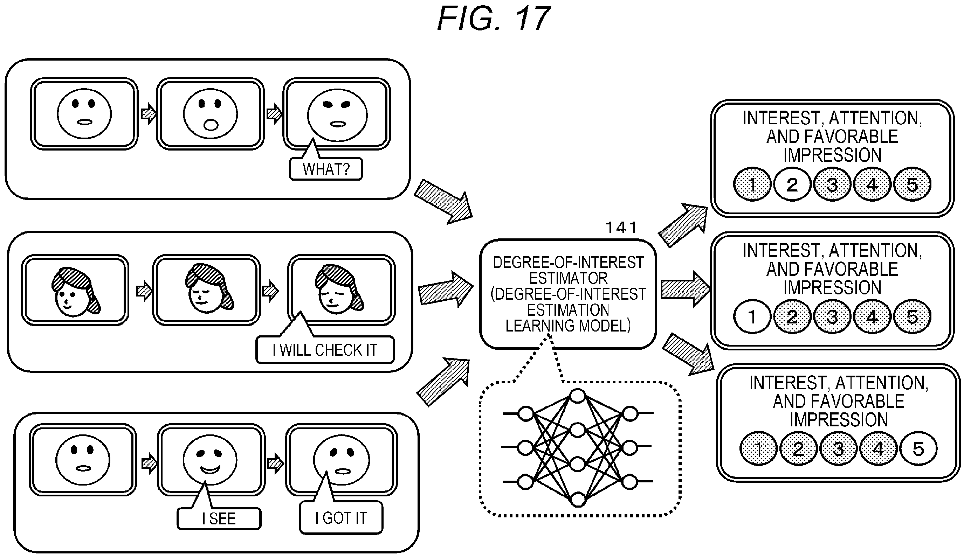

That is, as illustrated in Fig. 17, the degree-of-interest estimator generation unit (degree-of-interest estimation learning model generation unit) 131 generates the degree-of-interest estimator (degree-of-interest estimation learning model) 141 that receives the input of at least one of the image and voice data of the customer-side user or the image and voice data of the sales-side user and outputs an estimated value of the interest, attention, and favorable impression score of the customer-side user as an output.

That is, an estimator (learning model) configured to estimate a user state on the basis of at least one of image data or voice data of one or more users participating in a meeting via a communication network is generated.

Each of the examples described with reference to Figs. 14 to 17 is an example of the learning processing performed by the degree-of-interest estimator generation unit (degree-of-interest estimation learning model generation unit) 131 and an example of use of the degree-of-interest estimator (degree-of-interest estimation learning model) 141 generated as a result of the learning.

The other degree-of-understanding estimator generation unit (degree-of-understanding estimation learning model generation unit) 132 and degree-of-fatigue estimator generation unit (degree-of-fatigue estimation learning model generation unit) 133 each also perform similar learning processing.

The degree-of-understanding estimator generation unit (degree-of-understanding estimation learning model generation unit) 132 generates the degree-of-understanding estimator (degree-of-understanding estimation learning model) 142 that receives the input of at least one of the image and voice data of the customer-side user or the image and voice data of the sales-side user and outputs an estimated value of the understanding, acceptance, and satisfaction score of the customer-side user as an output.

Moreover, the degree-of-fatigue estimator generation unit (degree-of-fatigue estimation learning model generation unit) 133 generates the degree-of-fatigue estimator (degree-of-fatigue estimation learning model) 143 that receives the input of at least one of the image and voice data of the customer-side user or the image and voice data of the sales-side user and outputs an estimated value of the fatigue and stress score of the customer-side user as an output.

### [4. User state estimator (learning model) generation processing corresponding to meeting condition executed by information processing device, and processing of selecting high-accuracy user state estimator (learning model) from generated user state estimators (learning models)]

Next, a description will be made on user state estimator (learning model) generation processing corresponding to a meeting condition executed by the information processing device, and processing of selecting a high-accuracy user state estimator (learning model) from the generated user state estimators (learning models).

The processing described below corresponds to: the machine learning processing for generating the user state estimator (learning model) executed by the information processing device 100 in (step S105); and the selection processing of the user state estimator (learning model) executed in (step S106), in the flowchart described with reference to Fig. 5.

Note that the user state estimator (learning model) generation processing example described above with reference to Figs. 13 to 17 is a processing example in which:
the degree-of-interest estimator generation unit (degree-of-interest estimation learning model generation unit) 131 generates one degree-of-interest estimator (degree-of-interest estimation learning model) 141, the degree-of-understanding estimator generation unit (degree-of-understanding estimation learning model generation unit) 132 generates one degree-of-understanding estimator (degree-of-understanding estimation learning model) 142, and the degree-of-fatigue estimator generation unit (degree-of-fatigue estimation learning model generation unit) 133 generates one degree-of-fatigue estimator (degree-of-fatigue estimation learning model) 143.

The processing example described below is a processing example of generating each of the estimator generation units (learning model generation units) 131 to 133 as a plurality of user state estimators (learning models) according to meeting conditions.

The meeting condition is the meeting condition (MTG tag) described above with reference to Fig. 6. That is, the meeting condition is the meeting condition (MTG tag) set before the start of the meeting, and is each of the following conditions.

| | |
|---|---|
| (Tag a) | meeting (MTG) genre |
| (Tag b) | meeting (MTG) scale |
| (Tag c) | fatigue (customer) |
| (Tag d) | busyness (customer) |

When these meeting conditions are different, the user state of the customer-side user 11, that is,
(user state 1) interest, attention, and favorable impression;
(user state 2) understanding, acceptance, and satisfaction; and
(user state 3) fatigue and stress,
are also predicted to be different.

The processing example described below is a processing example based on this prediction, and each of the estimator generation units (learning model generation units) 131 to 133 generates a plurality of user state estimators (learning models) according to the meeting conditions.

Note that, in the following, as a representative example, a description is given to a generation processing example of the meeting-condition-corresponding degree-of-interest estimator (degree-of-interest estimation learning model) performed by the degree-of-interest estimator generation unit (degree-of-interest estimation learning model generation unit) 131.

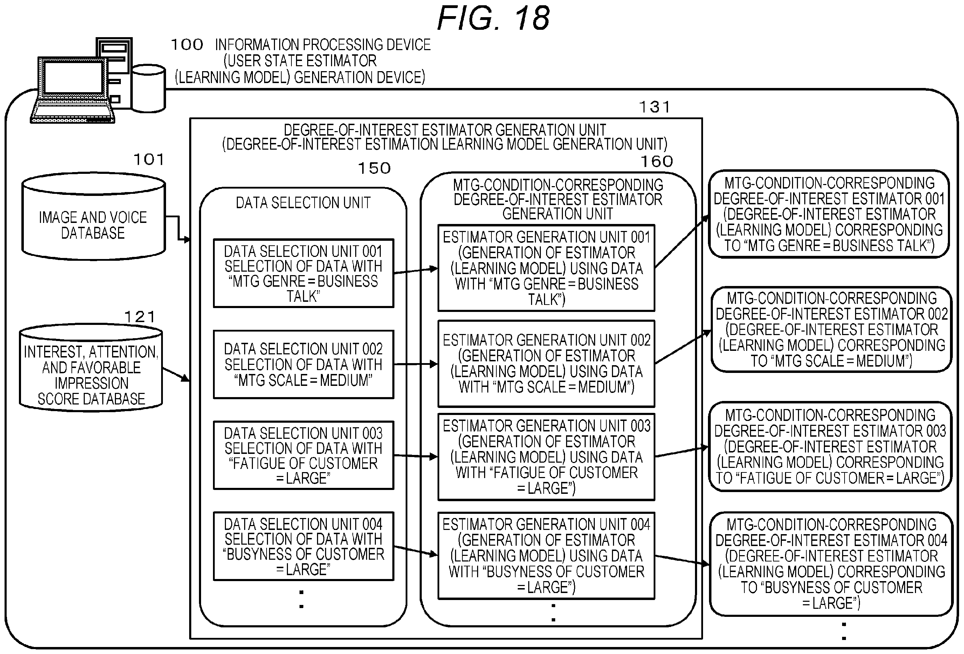

Fig. 18 is a diagram for describing a configuration and a processing example of the degree-of-interest estimator generation unit (degree-of-interest estimation learning model generation unit) 131 that generates a plurality of meeting-condition-corresponding degree-of-interest estimators (degree-of-interest estimation learning models).

The degree-of-interest estimator generation unit (degree-of-interest estimation learning model generation unit) 131 includes a data selection unit 150 and a meeting-condition-corresponding degree-of-interest estimator (degree-of-interest estimation learning model) generation unit 160.

The data selection unit 150 acquires only data matching a predetermined meeting condition from the image and voice database 101 and the interest, attention, and favorable impression score database 121.

These databases are the databases described above with reference to Fig. 11, and store image and voice data and interest, attention, and favorable impression scores (evaluation values) acquired in meetings executed in the past.

For example, a data selection unit 001 acquires image and voice data and interest, attention, and favorable impression score (evaluation value) data acquired in a meeting in which the following meeting condition is set,
meeting (MTG) genre = business talk,
as a meeting condition, from the image and voice database 101 and the interest, attention, and favorable impression score database 121.

An estimator generation unit 001 of the meeting-condition-corresponding degree-of-interest estimator (degree-of-interest estimation learning model) generation unit 160 executes machine learning processing using the data selected by the data selection unit 001, that is, the image and voice data and the interest, attention, and favorable impression score (evaluation value) data acquired in a meeting in which the following meeting condition is set,
meeting (MTG) genre = business talk,
to generate a meeting-condition-corresponding degree-of-interest estimator 001 illustrated at the right end of the figure.

The "meeting-condition-corresponding degree-of-interest estimator 001" illustrated at the right end of Fig. 18 is the degree-of-interest estimator (learning model) generated on the basis of only data (image, voice, and score) with "meeting (MTG) genre = business talk".

Furthermore, a data selection unit 002 acquires image and voice data and interest, attention, and favorable impression score (evaluation value) data acquired in a meeting in which the following meeting condition is set,
meeting (MTG) scale = medium,
as a meeting condition, from the image and voice database 101 and the interest, attention, and favorable impression score database 121.

An estimator generation unit 002 of the meeting-condition-corresponding degree-of-interest estimator (degree-of-interest estimation learning model) generation unit 160 executes machine learning processing using the data selected by the data selection unit 002, that is, the image and voice data and the interest, attention, and favorable impression score (evaluation value) data acquired in a meeting in which the following meeting condition is set,
meeting (MTG) scale = medium,
to generate a meeting-condition-corresponding degree-of-interest estimator 002 illustrated at the right end of the figure.

The "meeting-condition-corresponding degree-of-interest estimator 002" illustrated at the right end of Fig. 18 is the degree-of-interest estimator (learning model) generated on the basis of only data (image, voice, and score) with "meeting (MTG) scale = medium".

Hereinafter, similarly, from the image and voice database 101 and the interest, attention, and favorable impression score database 121, a data selection unit 003 acquires image and voice data and interest, attention, and favorable impression score (evaluation value) data acquired in a meeting in which a meeting condition "fatigue of the customer-side user = large" is set, and the data selection unit 004 acquires image and voice data and interest, attention, and favorable impression score (evaluation value) data acquired in a meeting in which a meeting condition "busyness of the customer-side user = large" is set.

An estimator generation unit 003 executes machine learning processing using the data selected by the data selection unit 003, that is, the image and voice data and the interest, attention, and favorable impression score (evaluation value) data acquired in a meeting in which the following meeting condition is set,
fatigue of the customer-side user = large,
to generate a meeting-condition-corresponding degree-of-interest estimator 003 illustrated at the right end of the figure.

The "meeting-condition-corresponding degree-of-interest estimator 003" is the degree-of-interest estimator (learning model) generated on the basis of only data (image, voice, and score) with "fatigue of the customer-side user = large".

The estimator generation unit 004 executes machine learning processing using the data selected by the data selection unit 004, that is, the image and voice data and the interest, attention, and favorable impression score (evaluation value) data acquired in a meeting in which the following meeting condition is set,
busyness of the customer-side user = large,
to generate the meeting-condition-corresponding degree-of-interest estimator 004 illustrated at the right end of the figure.

The "meeting-condition-corresponding degree-of-interest estimator 004" is the degree-of-interest estimator (learning model) generated on the basis of only data (image, voice, and score) with "busyness of the customer-side user = large".

Note that Fig. 18 illustrates only these four examples, but the information processing device 100 executes similar processing for all the combination types of the meeting conditions, and generates a "meeting-condition-corresponding degree-of-interest estimator (learning model)" corresponding to all the combination types of the meeting conditions.

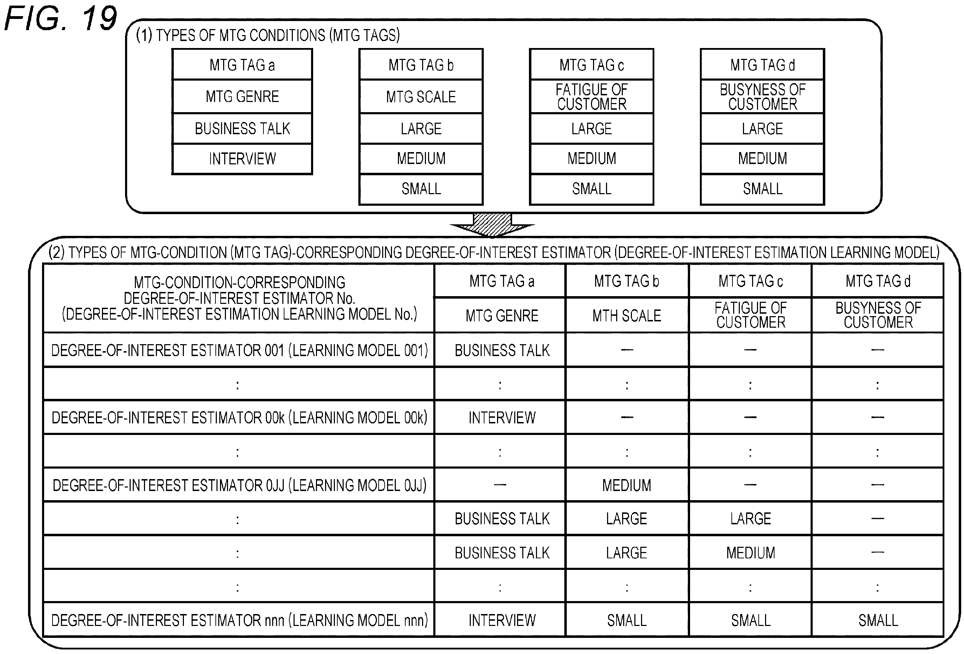

An example of the combination types of the meeting conditions will be described with reference to Fig. 19.

It is assumed that there are the following tags as tags that can be set as meeting conditions:
(tag a) meeting (MTG) genre = business talk, interview;
(tag b) meeting (MTG) scale = large, medium, small;
(tag c) fatigue (customer) = large, medium, small; and
(tag d) busyness (customer) = large, medium, small.

In a case of the setting described above, two types of condition settings can be made for the tag a, and three types of condition settings can be made for each of the tags b to d, and the number of combinations is 2 × 3 × 3 × 3 = 54. Moreover, if a case of no condition setting is not included for each of the tags a to d, the total number of combinations of the meeting conditions is 3 × 4 × 4 × 4 = 192.

The information processing device 100 executes similar processing for all these combination types of the meeting conditions, and generates meeting-condition-corresponding degree-of-interest estimators (learning models) corresponding to all the combination types of the meeting conditions.

When the information processing device 100 completes the processing of generating the meeting-condition-corresponding degree-of-interest estimators (learning models) in all the combinations of the meeting conditions, next, the information processing device 100 executes evaluation processing of the generated large number of the meeting-condition-corresponding degree-of-interest estimators (learning models).

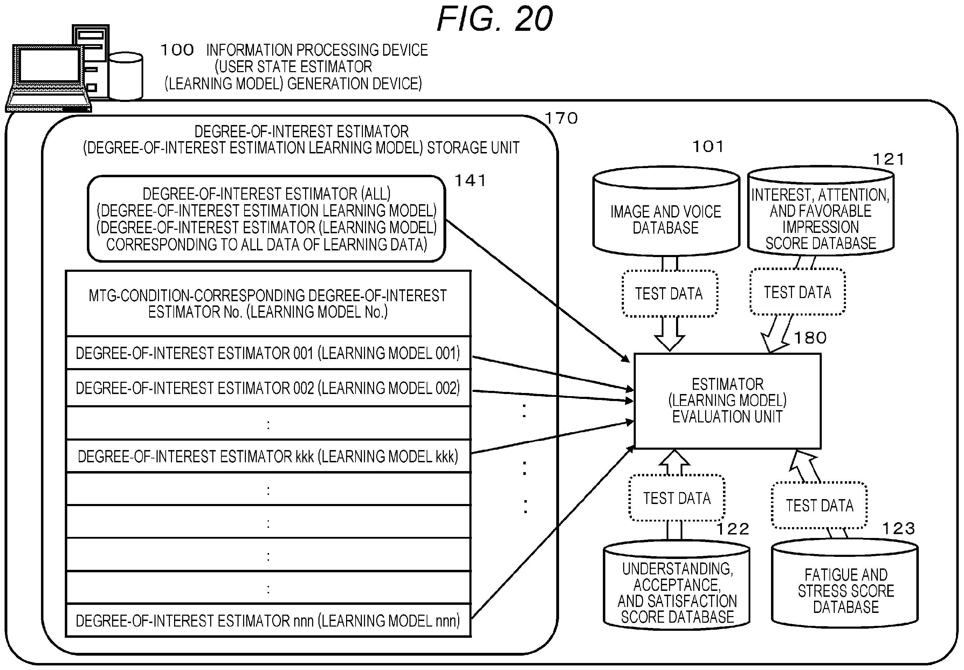

A specific example of the estimator evaluation processing will be described with reference to Fig. 20 and subsequent figures.

As illustrated in Fig. 20, the information processing device 100 includes a degree-of-interest estimator (degree-of-interest estimation learning model) storage unit 170 and an estimator (learning model) evaluation unit 180.

The degree-of-interest estimator (degree-of-interest estimation learning model) storage unit 170 stores the degree-of-interest estimator (degree-of-interest estimation learning model) 141 generated by the learning processing described above with reference to Fig. 13, and the meeting-condition-corresponding degree-of-interest estimator (degree-of-interest estimation learning model) described with reference to Fig. 17.

Note that the degree-of-interest estimator (degree-of-interest estimation learning model) 141 is a degree-of-interest estimator (degree-of-interest estimation learning model) that is generated by using almost all data of log data generated by using data not limited by the meeting condition.

The estimator (learning model) evaluation unit 180 executes evaluation processing of each of the degree-of-interest estimators (degree-of-interest estimation learning models) stored in the degree-of-interest estimator (degree-of-interest estimation learning model) storage unit 170.

In this evaluation processing, data stored in the image and voice database 101, the interest, attention, favorable impression score database 121, the understanding, acceptance, and satisfaction score database 122, and the fatigue and stress score database 123 are used.

As described above with reference to Fig. 11 and the like, the data stored in each of these databases is image data, voice data, and a score (evaluation value) of each user state acquired from the customer-side user terminal 21 and the sales-side user terminal 22 during execution of meetings.

These pieces of data stored in the databases are used in the learning processing for generating the estimators (learning models) described above with reference to Figs. 13 and 17, but a part thereof is used as test data to be applied to the evaluation processing in the estimator (learning model) evaluation unit 180 illustrated in Fig. 20.

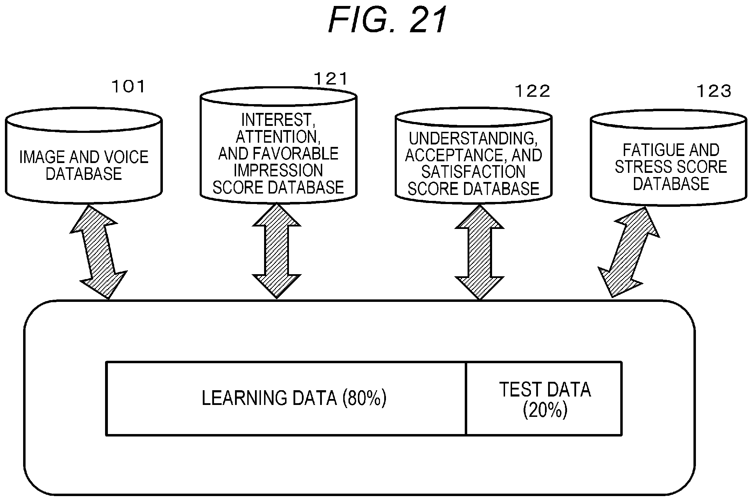

For example, as illustrated in Fig. 21, 80% of the data stored in each database is set as learning data to be used for learning processing, the remaining 20% is used as test data to be applied to the evaluation processing in the estimator (learning model) evaluation unit 180 illustrated in Fig. 20.

The estimator (learning model) evaluation unit 180 illustrated in Fig. 20 executes the evaluation processing of each of the degree-of-interest estimators (degree-of-interest estimation learning models) stored in the degree-of-interest estimator (degree-of-interest estimation learning model) storage unit 170.

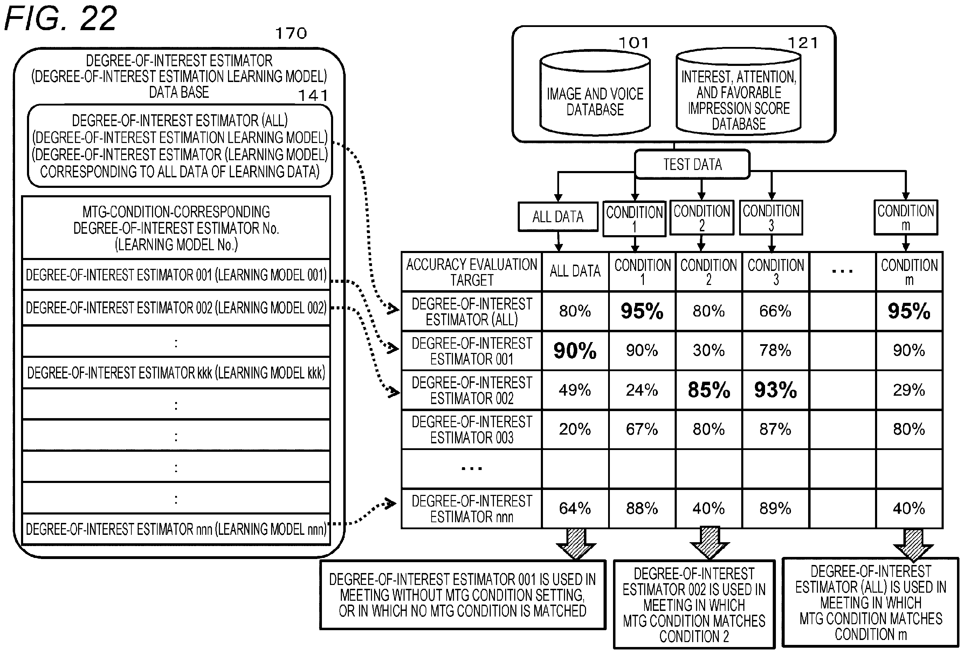

With reference to Fig. 22, a specific example of the estimator (learning model) evaluation processing executed by the estimator (learning model) evaluation unit 180 will be described.

Note that the evaluation processing executed by the estimator (learning model) evaluation unit 180 is evaluation processing of each estimator described below.
(a) Evaluation processing of a degree-of-interest estimator (degree-of-interest estimation learning model) generated by the degree-of-interest estimator generation unit (degree-of-interest estimation learning model generation unit) 131
(b) Evaluation processing of a degree-of-understanding estimator (degree-of-understanding estimation learning model) generated by the degree-of-understanding estimator generation unit (degree-of-understanding estimation learning model generation unit) 132
(c) Evaluation processing of a degree-of-fatigue estimator (degree-of-fatigue estimation learning model) generated by the degree-of-fatigue estimator generation unit (degree-of-interest estimation learning model generation unit) 133

Hereinafter, with reference to Fig. 22, as a representative example, an evaluation processing example of the degree-of-interest estimator (degree-of-interest estimation learning model) generated by the degree-of-interest estimator generation unit (degree-of-interest estimation learning model generation unit) 131 will be described.

Fig. 22 is a diagram for describing details of the evaluation processing of the degree-of-interest estimator (degree-of-interest estimation learning model) executed by the estimator (learning model) evaluation unit 180 illustrated in Fig. 20.

The estimator (learning model) evaluation unit 180 first selects one degree-of-interest estimator (degree-of-interest estimation learning model) as an evaluation target from the degree-of-interest estimators (degree-of-interest estimation learning models) stored in the degree-of-interest estimator (degree-of-interest estimation learning model) storage unit 170.

The estimator (learning model) evaluation unit 180 inputs image and voice data, which are test data acquired from the image and voice database 101, to the one selected degree-of-interest estimator (degree-of-interest estimation learning model), and executes estimation processing of the interest, attention, and favorable impression score (evaluation value).

Test data (image and voice data) corresponding to various meeting conditions are sequentially input to the one selected degree-of-interest estimator (degree-of-interest estimation learning model), and score estimation processing is executed.

As illustrated in the figure, the test data include a data group of a plurality of meeting condition units such as all data, condition 1, condition 2, and condition 3,... These are sequentially input to the degree-of-interest estimator (degree-of-interest estimation learning model) as an evaluation target.

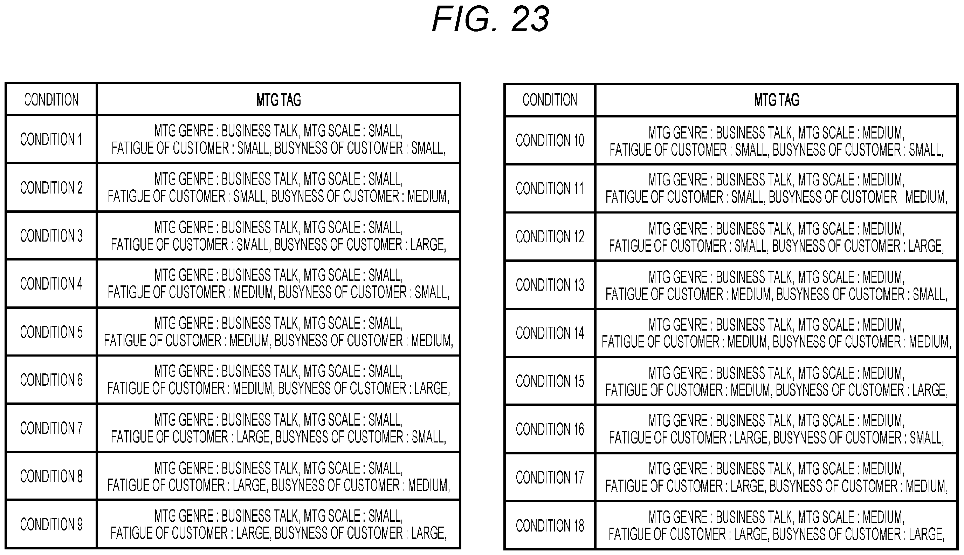

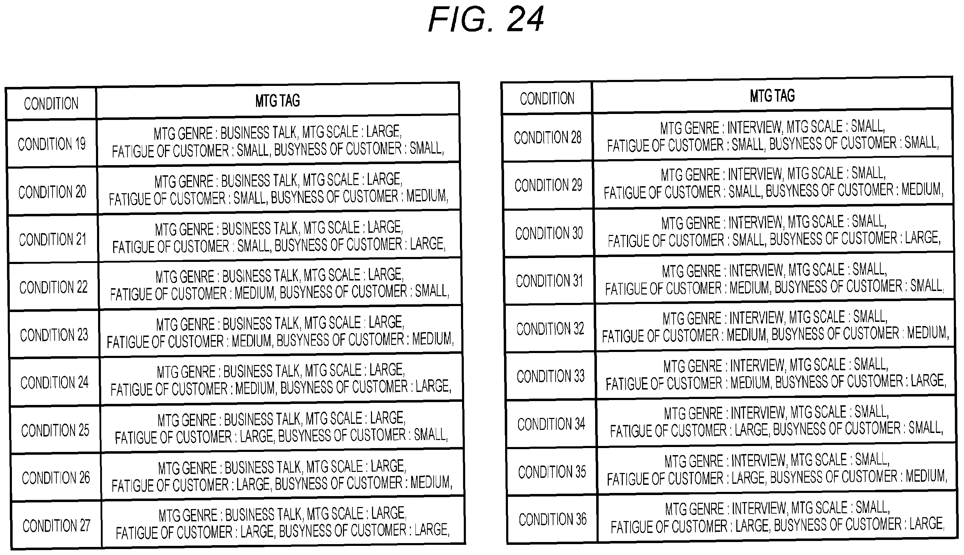

Some of specific examples of each meeting condition of the meeting conditions 1, 2, 3, ..., used as test data are illustrated in Figs. 23 and 24. Figs. 23 and 24 illustrate examples of combinations of individual meeting conditions, that is,
(a) meeting (MTG) genre = business talk, interview,
(b) meeting (MTG) scale = large, medium, small,
(c) fatigue (customer) = large, medium, small, and
(d) busyness (customer) = large, medium, small.

Note that the examples of the meeting conditions illustrated in Figs. 23 and 24 are partial.

As described above, in a case where two types of the MTG tag a and three types of the MTG tags b to d can be set, the number of possible combinations of the meeting conditions (MTG tags) are 2 × 3 × 3 × 3 = 54. Moreover, if a case of no condition setting is not included for each of the tags a to d, the total number of combinations of the meeting conditions is 3 × 4 × 4 × 4 = 192.

Data individually matching these conditions are sequentially acquired from the image and voice database 101 and the interest, attention, and favorable impression score database 121, and evaluation processing is executed.

For example, the estimator (learning model) evaluation unit 180 inputs image and voice data acquired from the image and voice database 101 and matching a certain meeting condition to the degree-of-interest estimator (learning model) as an evaluation target, and an estimated value of the interest, attention, and favorable impression score (evaluation value) is output.

The estimator (learning model) evaluation unit 180 compares the estimation score with the actual score (evaluation value) stored in the interest, attention, and favorable impression score database 121, that is, the score input by the customer-side user 11 during execution of the meeting, and calculates a matching rate (matching rate).

[xy%] illustrated in Fig. 22 is a numerical value indicating this matching rate.

That is, the score (evaluation value) stored in the interest, attention, and favorable impression score database 121 is used as a correct answer, and the rate at which the estimation score that is the output of the degree-of-interest estimator (learning model) matches the correct answer is calculated.

Note that the image and voice data input from the image and voice database 101 to the degree-of-interest estimator (learning model) is assumed to be image and voice data in a predetermined period from a time stamp of the actual score (evaluation value) stored in the interest, attention, and favorable impression score database 121, for example, from 30 seconds ago to a time matching the time stamp.

For example, in a case where the degree-of-interest estimator (learning model) as an evaluation target is the degree-of-interest estimator 002 (learning model 002), the estimator (learning model) evaluation unit 180 first acquires a score (evaluation value) actually input by the customer-side user 11 in a meeting in which one meeting condition, for example, a meeting condition matching the condition 1 is set, from the interest, attention, and favorable impression score database 121.

Next, image and voice data in a predetermined period from a time stamp of the interest, attention, and favorable impression score (evaluation value) acquired from the interest, attention, and favorable impression score database 121, for example, from 30 seconds before to a time corresponding to the time stamp are acquired from the image and voice database 101 and input to the degree-of-interest estimator 002 (learning model 002) as an evaluation target, and an estimation score is acquired as an output.

Finally, it is determined whether or not the estimation score of the degree-of-interest estimator 002 (learning model 002) as an evaluation target matches the actual user input score acquired from the interest, attention, and favorable impression score database 121.

As the matching rate is higher, it is determined that the estimator (learning model) is capable of highly accurate estimation.

As illustrated in Fig. 22, the test data is sectioned into a plurality of meeting condition units such as all data, condition 1, condition 2, and condition 3 ···.

Note that all the data are data regardless of meeting conditions, and evaluation processing is performed using all the test data stored in the image and voice database 101 and the interest, attention, and favorable impression score database 121.

Fig. 22 illustrates an evaluation result obtained as such an evaluation processing result, that is, a matching rate between the estimation score of each estimator (learning model) and the actual user input score that is an answer.

For example, the matching rate (accuracy rate) as the evaluation value obtained by inputting the test data of [Condition 2] to each estimator (learning model) is 85% for the degree-of-interest estimator 002 (learning model 002), indicating the highest value.

From this result, it is possible to conclude that it is preferable to use the degree-of-interest estimator 002 (learning model 002) having the highest accuracy rate in meetings in which the condition matching the meeting condition 2 is set.

Furthermore, for example, the matching rate (accuracy rate) as the evaluation value obtained by inputting the test data of [Condition m] to each estimator (learning model) is 95% for the degree-of-interest estimator (all) (= degree-of-interest estimator (learning model) 141), indicating the highest value.

From this result, it is possible to conclude that it is preferable to use the degree-of-interest estimator (all) (= the degree-of-interest estimator (learning model) 141) having the highest accuracy rate in meetings in which the condition matching the meeting condition m is set.

On the basis of these evaluation results, the degree-of-interest estimator (degree-of-interest estimation learning model) to be used in the actual meeting is selected.

Note that the estimator evaluation processing described with reference to Fig. 22 is an evaluation processing example of the degree-of-interest estimator (degree-of-interest estimation learning model) generated by the degree-of-interest estimator generation unit (degree-of-interest estimation learning model generation unit) 131.

The estimator (learning model) evaluation unit 180 similarly executes the evaluation processing for the evaluation processing of the degree-of-understanding estimator (degree-of-understanding estimation learning model) generated by the degree-of-understanding estimator generation unit (degree-of-understanding estimation learning model generation unit) 132, and the evaluation processing of the degree-of-fatigue estimator (degree-of-fatigue estimation learning model) generated by the degree-of-fatigue estimator generation unit (degree-of-fatigue estimation learning model generation unit) 133.

Note that, in a case of executing the evaluation processing of the degree-of-understanding estimator (degree-of-understanding estimation learning model) generated by the degree-of-understanding estimator generation unit (degree-of-understanding estimation learning model generation unit) 132, the data stored in the image and voice database 101 and the understanding, acceptance, and satisfaction score database 122 are used.

Furthermore, in a case of executing the evaluation processing of the degree-of-fatigue estimator (degree-of-fatigue estimation learning model) generated by the degree-of-fatigue estimator generation unit (degree-of-fatigue estimation learning model generation unit) 133, the data stored in the image and voice database 101 and the fatigue and stress score database 123 are used.

According to the evaluation processing executed in the estimator (learning model) evaluation unit 180, it is possible to determine an optimal estimator (learning model) that should be used in various meeting conditions, that is, an optimal estimator (learning model) capable of executing estimation processing with the highest accuracy.

That is, it is possible to select the estimator (learning model) having the highest accuracy rate according to conditions of the actual meeting.

### [5. Details of user state estimation processing using user state estimator (user state estimation learning model)]

Next, details of user state estimation processing using a user state estimator (user state estimation learning model) will be described.

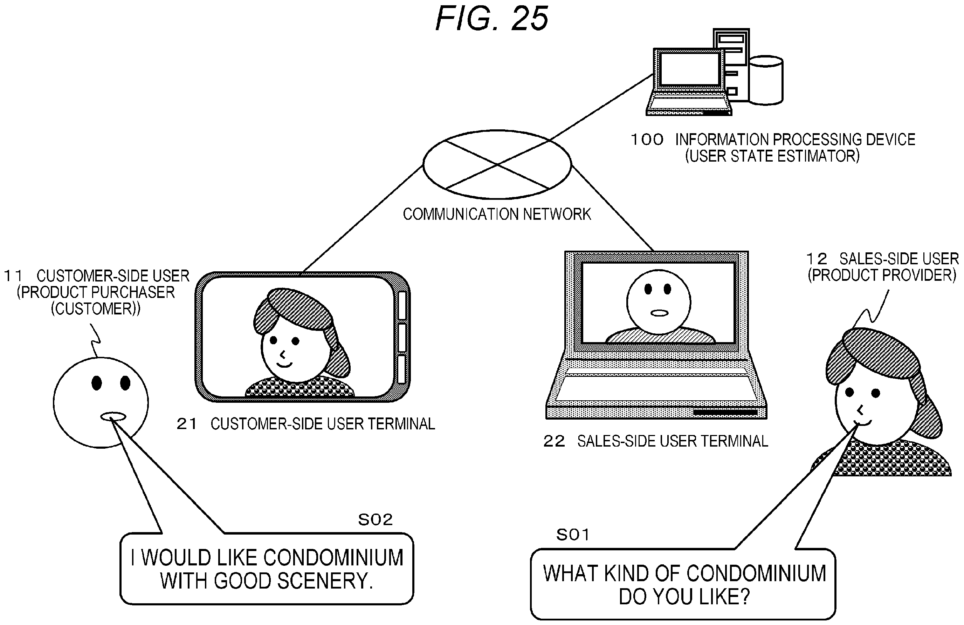

With reference to Fig. 25 and subsequent figures, details of the user state estimation processing using a user state estimator (user state estimation learning model) will be described.

As described above, the information processing device of the present disclosure executes the following two processes.

(Process 1) A process of generating a user state estimator (learning model) configured to estimate a user state such as emotion of a user participating in a remote meeting via a communication network on the basis of an image, voice, and the like.

(Process 2) A process of estimating user emotion by using the generated user state estimator (learning model).

(Process 1) is as already described above.

Hereinafter, a specific example of "(Process 2) a process of estimating user emotion by using the generated user state estimator (learning model)" will be described.

Fig. 25 is a diagram illustrating an example of a remote meeting held via a communication network.

Fig. 25 illustrates the customer-side user 11 who is a customer as a potential purchaser and the sales-side user 12 as a product provider.

The customer-side user terminal 21 such as a smartphone and the sales-side user terminal 22 such as a PC are connected via a communication network, and communicates with each other by mutually transmitting and receiving voice and images to conduct a business talk.

At the time of generating the learning model described above, the customer-side user 11 is not an actual customer but a user who has been playing the role of a customer, but the customer-side user 11 illustrated in Fig. 25 is an actual customer.

The example illustrated in Fig. 25 is an example in which the customer-side user 11 who is a customer as a potential purchaser of a condominium, and the sales-side user 12 is a vendor of the condominium.

While listening to desired conditions of the customer-side user 11, the sales-side user 12 selects a condominium that meets the desired conditions of the customer-side user 11 and gives an explanation.

The information processing device 100 connected to the network is the device that has generated estimators (learning models) through (Process 1) described above. That is, the following estimators (learning models) configured to estimate each of the user states are generated and held.
(a) Degree-of-interest estimator (degree-of-interest estimation learning model)
(b) Degree-of-understanding estimator (degree-of-understanding estimation learning model)
(c) Degree-of-fatigue estimator (degree-of-fatigue estimation learning model)

Note that one highest-accuracy estimator (learning model) corresponding to various meeting conditions has been selected as the use recommendation estimator for each of all estimators (learning models).

The meeting condition is a combination of the following individual conditions, for example.
(a) Meeting (MTG) genre = business talk, interview
(b) Meeting (MTG) scale = large, medium, small
(c) Fatigue (customer) = large, medium, small
(d) Busyness (customer) = large, medium, small

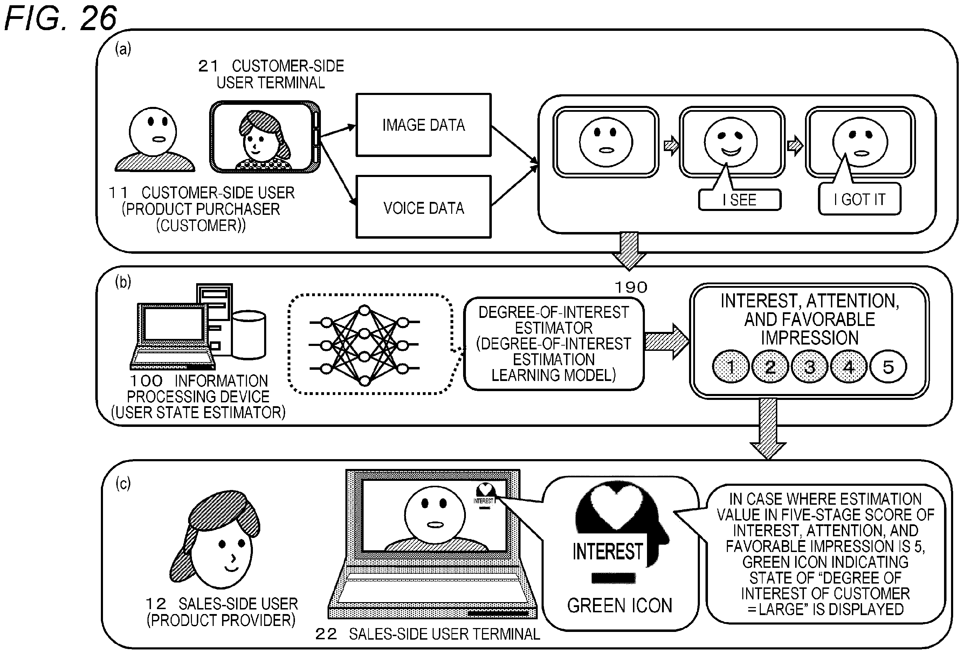

A specific example of the user state estimation processing executed by the information processing device 100 illustrated in Fig. 25 will be described with reference to Fig. 26 and subsequent figures.

The example illustrated in Fig. 26 is a specific example of degree-of-interest estimation processing of the customer-side user 11 using the degree-of-interest estimator (degree-of-interest estimation learning model) 190 generated by the information processing device 100.

Fig. 26(a) illustrates an example of data acquired in the customer-side user terminal 21 and transmitted to the information processing device 100.

As illustrated in the figure, a camera and a microphone of the customer-side user terminal 21 acquire image data including the face of the customer-side user and voice data including the voice of the customer-side user 11, and transmit the image data and the voice data to the information processing device 100 via a network.

Fig. 26(b) illustrates degree-of-interest estimation processing of the customer-side user 11 executed in the information processing device 100.

The information processing device 100 inputs the image data and the voice data of the customer-side user received from the customer-side user terminal 21, to the degree-of-interest estimator (degree-of-interest estimation learning model) 190.

Note that the degree-of-interest estimator (degree-of-interest estimation learning model) 190 used here is determined on the basis of a meeting condition executed between the customer side 11 and the sales-side user 12.

That is, the estimator selected in the evaluation processing of the degree-of-interest estimator (degree-of-interest estimation learning model) described above with reference to Fig. 22 is used.

Specifically, the degree-of-interest estimator (degree-of-interest estimation learning model) determined to be capable of the highest-accuracy score estimation in the meeting condition executed between the customer side 11 and the sales-side user 12 is selected.

The information processing device 100 inputs the image data and voice data of the customer-side user received from the customer-side user terminal 21 to the degree-of-interest estimator (degree-of-interest estimation learning model) 190, and outputs an estimated value of the interest, attention, and favorable impression score as an output.

In the example illustrated in the figure,
interest, attention, and favorable impression score = 5
is output.

The information processing device 100 transmits, to the sales-side user terminal 22, the estimated value of the interest, attention, and favorable impression score obtained as the output of the degree-of-interest estimator (degree-of-interest estimation learning model) 190.

Fig. 26(c) is a diagram illustrating a processing example of the sales-side user terminal 22.

The sales-side user terminal 22 that has received the estimated value of the interest, attention, and favorable impression score, which is the output value of the degree-of-interest estimator (degree-of-interest estimation learning model) 190 from the information processing device 100, displays an icon according to the received score on the sales-side user terminal 22.

The example illustrated in the figure is an icon display example in a case where the estimated value of the interest, attention, and favorable impression score of the customer-side user 11 is 5, which is the maximum value, and is an icon indicating that the interest, attention, and favorable impression score of the customer-side user 11 is a high value.

As illustrated in the figure, a green icon including characters of "interest" is displayed.

By viewing the display of the icon, the sales-side user 12 can confirm that the interest, attention, and favorable impression of the customer-side user 11 are in a high state.

The icons displayed on the sales-side user terminal 22 are icons different in accordance with a value of an estimation score (evaluation value) obtained by applying the degree-of-interest estimator (degree-of-interest estimation learning model) 190 in the information processing device 100, that is, a value of the interest, attention, and favorable impression estimation score (evaluation value).

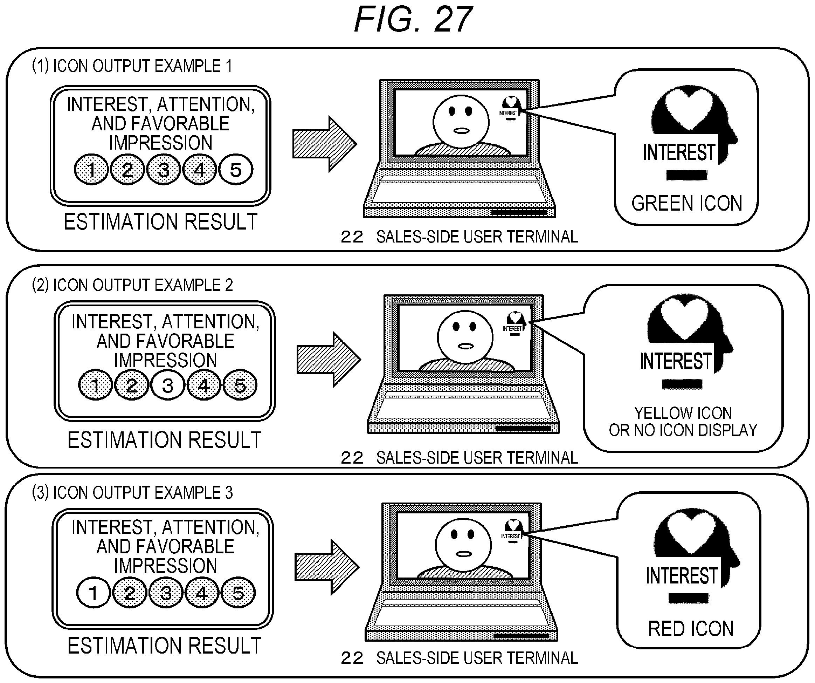

An example of a correspondence between the value of the estimation score and the display icon will be described with reference to Fig. 27.

Fig. 27 illustrates three types of icon output examples for the sales-side user terminal 22.

Fig. 27(1) Icon output example 1 is an icon output example in a case where the estimated value of the interest, attention, and favorable impression score output by the degree-of-interest estimator (degree-of-interest estimation learning model) 190 of the information processing device 100 is the maximum value (5) .

In this case, as illustrated in the figure, a green icon including characters of "interest" is displayed.

Fig. 27(2) Icon output example 2 is an icon output example in a case where the estimated value of the interest, attention, and favorable impression score output by the degree-of-interest estimator (degree-of-interest estimation learning model) 190 of the information processing device 100 is (3).

In this case, a yellow icon including characters of "interest" is displayed as illustrated in the figure. Alternatively, the icon display is stopped.

Fig. 27(3) Icon output example 3 is an icon output example in a case where the estimated value of the interest, attention, and favorable impression score output by the degree-of-interest estimator (degree-of-interest estimation learning model) 190 of the information processing device 100 is the minimum value (1) .

In this case, a red icon including characters of "interest" is displayed as illustrated in the figure.

By viewing the display of these icons, the sales-side user 12 can check whether the interest, attention, and favorable impression of the customer-side user 11 are in a high state or a low state, and take appropriate measures such as changing dialogue contents in accordance with the checking result.

The processing example described with reference to Figs. 26 and 27 is a processing example in which the information processing device 100 estimates the interest, attention, and favorable impression score of the customer-side user 11 by using the degree-of-interest estimator (degree-of-interest estimation learning model), and displays the icon reflecting the score estimation result on the sales-side user terminal 22 on the basis of the estimation result.

The information processing device 100 holds different user state estimators in addition to the degree-of-interest estimator (degree-of-interest estimation learning model) 190. That is, the following estimators (learning models) configured to estimate individual user states are held.
(a) Degree-of-interest estimator (degree-of-interest estimation learning model)
(b) Degree-of-understanding estimator (degree-of-understanding estimation learning model)
(c) Degree-of-fatigue estimator (degree-of-fatigue estimation learning model)

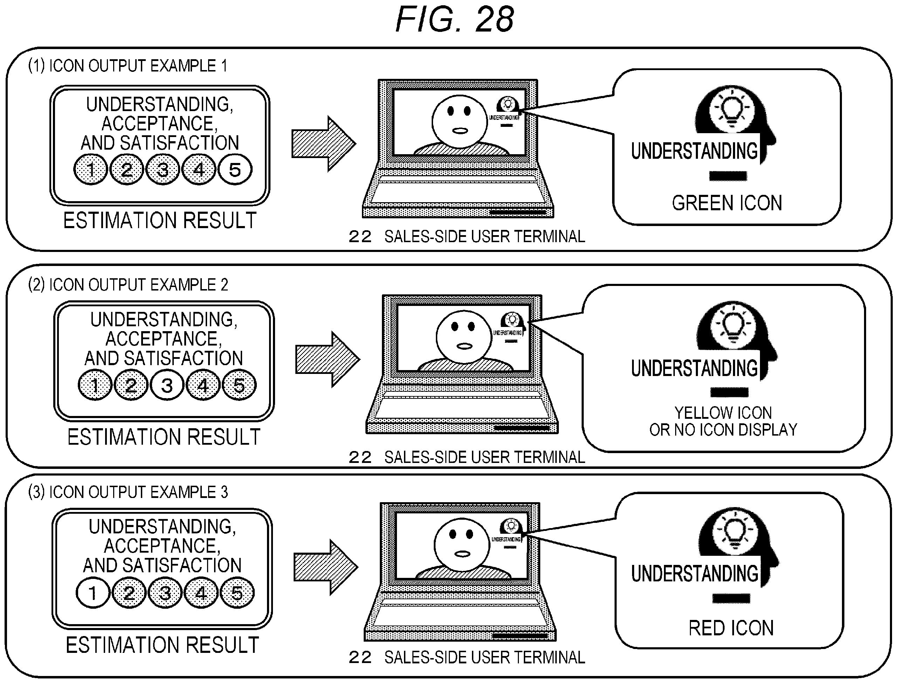

A processing example in a case where the degree-of-understanding estimator (degree-of-understanding estimation learning model) is used will be described with reference to Fig. 28.

Fig. 28 is a diagram illustrating a display example of icons displayed on the sales-side user terminal 22, that is, various icons reflecting estimation results in a case where the information processing device 100 estimates the understanding, acceptance, and satisfaction score of the customer-side user 11 by using the degree-of-understanding estimator (degree-of-understanding estimation learning model).

Fig. 28(1) Icon output example 1 is an icon output example in a case where the estimated value of the understanding, acceptance, and satisfaction score output by the degree-of-understanding estimator (degree-of-understanding estimation learning model) of the information processing device 100 is the maximum value (5) .

In this case, as illustrated in the figure, a green icon including characters of "understanding" is displayed.

Fig. 28(2) Icon output example 2 is an icon output example in a case where the estimated value of the understanding, acceptance, and satisfaction score output by the degree-of-understanding estimator (degree-of-understanding estimation learning model) of the information processing device 100 is (3).

In this case, a yellow icon including characters of "understanding" is displayed as illustrated in the figure. Alternatively, the icon display is stopped.

Fig. 28(3) Icon output example 3 is an icon output example in a case where the estimated value of the understanding, acceptance, and satisfaction score output by the degree-of-understanding estimator (degree-of-understanding estimation learning model) of the information processing device 100 is the minimum value (1) .

In this case, as illustrated in the figure, a red icon including characters of "understanding" is displayed.

By viewing the display of these icons, the sales-side user 12 can check whether the understanding, acceptance, and satisfaction of the customer-side user 11 are in a high state or a low state, and take appropriate measures such as changing dialogue contents in accordance with the checking result.

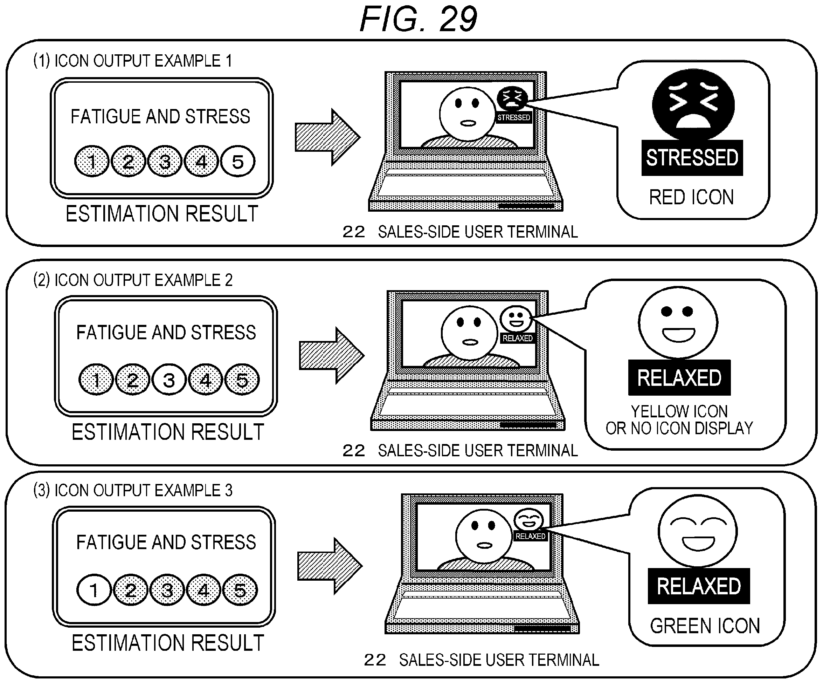

A processing example in a case where the degree-of-fatigue estimator (degree-of-fatigue estimation learning model) is used will be described with reference to Fig. 29.

Fig. 29 is a diagram illustrating a display example of icons displayed on the sales-side user terminal 22, that is, various icons reflecting estimation results in a case where the information processing device 100 estimates the fatigue and stress score of the customer-side user 11 by using the degree-of-fatigue estimator (degree-of-fatigue estimation learning model).

Fig. 29(1) Icon output example 1 is an icon output example in a case where the estimated value of the fatigue and stress score output by the degree-of-fatigue estimator (degree-of-fatigue estimation learning model) of the information processing device 100 is the maximum value (5).

In this case, as illustrated in the figure, a red icon including characters of "stressed" is displayed.

Fig. 29(2) Icon output example 2 is an icon output example in a case where the estimated value of the fatigue and stress score output by the degree-of-fatigue estimator (degree-of-fatigue estimation learning model) of the information processing device 100 is (3).

In this case, a yellow icon including characters of "relaxed" is displayed as illustrated in the figure. Alternatively, the icon display is stopped.

Fig. 29(3) Icon output example 3 is an icon output example in a case where the estimated value of the fatigue and stress score output by the degree-of-fatigue estimator (degree-of-fatigue estimation learning model) of the information processing device 100 is the minimum value (1).

In this case, as illustrated in the figure, a green icon including characters of "relaxed" is displayed.

By viewing the display of these icons, the sales-side user 12 can check whether the fatigue and stress of the customer-side user 11 are in a high state or a low state, and take appropriate measures such as changing dialogue contents in accordance with the checking result.

As described above with reference to Fig. 22, the information processing device 100 of the present disclosure determines the estimator (learning model) that should be used in various meeting conditions in advance by performing the evaluation processing of the estimator (learning model) evaluation unit 180.

That is, the estimator (learning model) that should be used by the estimator (learning model) capable of outputting the highest-accuracy evaluation value is determined according to the meeting condition.

In an actual meeting, a highest-accuracy estimator (learning model) according to a condition of the meeting is used.

By such estimator (learning model) selection processing, it is possible to perform highly accurate user state estimation processing.

### [6. Configuration examples of information processing device and user terminal]

Next, configuration examples of the information processing device and the user terminal will be described.

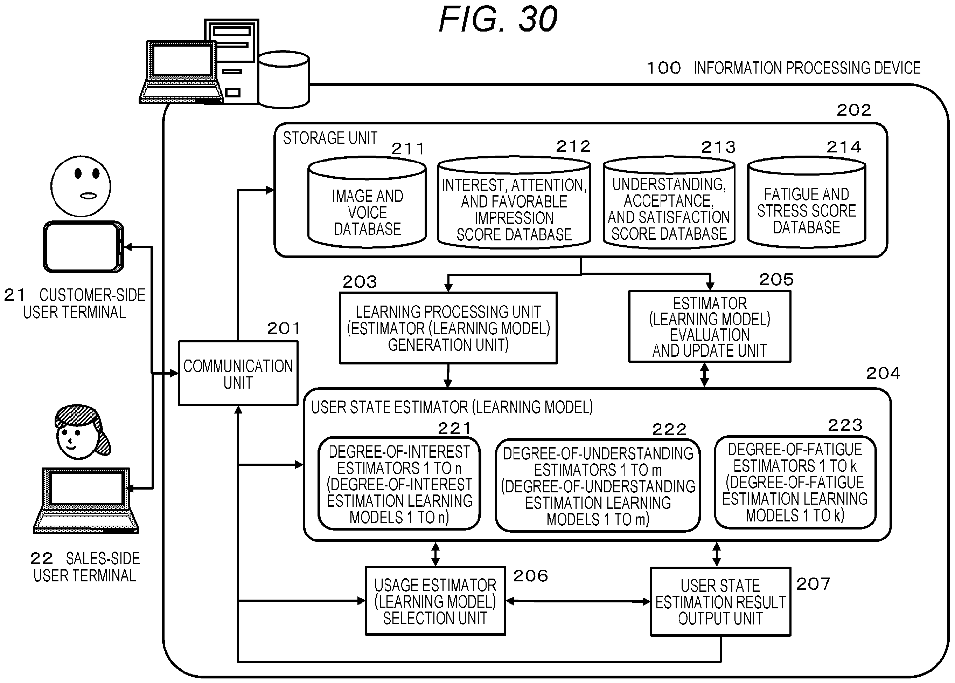

Fig. 30 is a block diagram illustrating a configuration example of the information processing device 100 of the present disclosure.

As described above, the information processing device 100 of the present disclosure executes the following two processes.

(Process 1) A process of generating a user state estimator (learning model) configured to estimate a user state such as emotion of a user participating in a remote meeting via a communication network on the basis of an image, voice, and the like.

(Process 2) A process of estimating user emotion by using the generated user state estimator (learning model).

The information processing device 100 illustrated in Fig. 30 has a configuration of executing these following two processes.

As illustrated in Fig. 30, the information processing device 100 includes: a communication unit 201; a storage unit 202; a learning processing unit (estimator (learning model) generation unit) 203; a user state estimator (learning model) 204; an estimator (learning model) evaluation and update unit 205; a usage estimator (learning model) selection unit 206; and a user state estimation result output unit 207.

Note that the storage unit 202 includes an image and voice database 211, an interest, attention, and favorable impression score database 212, an understanding, acceptance, and satisfaction score database 213, and a fatigue and stress score database 214.

Furthermore, the user state estimator (learning model) 204 includes: degree-of-interest estimators 1 to n (degree-of-interest estimation learning models 1 to n) 221; degree-of-understanding estimators 1 to n (degree-of-understanding estimation learning models 1 to n) 222; and degree-of-fatigue estimators 1 to n (degree-of-fatigue estimation learning models 1 to n) 223.

The communication unit 201 communicates with the customer-side user terminal 21 and the sales-side user terminal 22. Image and voice data are input from each terminal.

Furthermore, in a case of performing the processing of generating the user state estimator (learning model), the user state score (evaluation value) input by the customer-side user is input from the customer-side user terminal 21.

Moreover, in a case of performing the user state estimation processing to which the generated user state estimator (learning model) is applied, a value of a user state estimation score to which the user state estimator (learning model) is applied or icon data according to the value of the score is transmitted to the sales-side user terminal 22.

The image and voice database 211 of the storage unit 202 stores the image and voice data transmitted from the customer-side user terminal 21 and the sales-side user terminal 22.

Each of the interest, attention, and favorable impression score database 212, the understanding, acceptance, and satisfaction score database 213, and the fatigue and stress score database 214 stores the user state score (evaluation value) input from the customer-side user terminal 21 at the time of performing the processing of generating the user state estimator (learning model). As described above, a time stamp is added, as attribute data, to each user state score.

The learning processing unit (estimator (learning model) generation unit) 203 executes learning processing using data stored in each database of the storage unit 202, to generate the user state estimator (learning model). Specifically, the following three types of user state estimators (learning models) are generated.
(a) Degree-of-interest estimator (degree-of-interest estimation learning model)
(b) Degree-of-understanding estimator (degree-of-understanding estimation learning model)
(c) Degree-of-fatigue estimator (degree-of-fatigue estimation learning model)

Note that the learning processing unit (estimator (learning model) generation unit) 203 generates a plurality of user state estimators (learning models) corresponding to the meeting conditions as described above with reference to Fig. 18.

The user state estimator (learning model) generated by the learning processing unit (estimator (learning model) generation unit) 203 is each of the following estimators illustrated as the user state estimators (learning models) 204 in Fig. 30.
Degree-of-interest estimators 1 to n (degree-of-interest estimation learning models 1 to n) 221
Degree-of-understanding estimators 1 to n (degree-of-understanding estimation learning models 1 to n) 222
Degree-of-fatigue estimators 1 to n (degree-of-fatigue estimation learning models 1 to n) 223

Note that, for example, in a case where new learning data is stored in the storage unit 202, the learning processing unit (estimator (learning model) generation unit) 203 also executes processing of sequentially updating an estimator (learning model) that has been generated, by performing learning processing using the data.

The estimator (learning model) evaluation and update unit 205 executes evaluation processing and update processing of the estimator (learning model) generated by the learning processing unit (estimator (learning model) generation unit) 203.

This processing is the processing described above with reference to Fig. 22.

The estimator (learning model) evaluation and update unit 205 acquires test data corresponding to various meeting conditions from each database of the storage unit 202, and executes evaluation processing of each estimator (learning model).

As a result of this evaluation processing, a highest-accuracy estimator (learning model) corresponding to various meeting conditions is determined.

Note that the estimator (learning model) evaluation and update unit 205 records, as attribute information, use-target meeting condition information based on the evaluation result into each of the following estimators in the user state estimator (learning model) 204, that is,
the degree-of-interest estimators 1 to n (degree-of-interest estimation learning models 1 to n) 221;
the degree-of-understanding estimators 1 to n (degree-of-understanding estimation learning models 1 to n) 222; and
the degree-of-fatigue estimators 1 to n (degree-of-fatigue estimation learning models 1 to n) 223.

Moreover, when update processing of the estimator (learning model) by accumulation of new learning data, accumulation of new test data, or the like is performed, the estimator (learning model) evaluation and update unit 205 executes the evaluation processing of the estimator (learning model) and the update processing of the evaluation result as needed. Furthermore, processing of reflecting the evaluation and update results also in the attribute information of each estimator in the user state estimator (learning model) 204 is performed.

The usage estimator (learning model) selection unit 206 performs processing of selecting a user state estimator (learning model) to be used at the time of execution of an actual meeting in which the user state estimation processing is performed.

That is, the estimator (learning model) that should be used is selected from the following individual estimators in the user state estimator (learning model) 204 :
the degree-of-interest estimators 1 to n (degree-of-interest estimation learning models 1 to n) 221;
the degree-of-understanding estimators 1 to n (degree-of-understanding estimation learning models 1 to n) 222; and
the degree-of-fatigue estimators 1 to n (degree-of-fatigue estimation learning models 1 to n) 223.

Specifically, the highest-accuracy estimator (learning model) is selected as the use estimator (learning model) in accordance with the meeting condition of the meeting to be executed.

The user state estimation result output unit 207 transmits a value of a user state estimation score estimated using the user state estimator (learning model) in the actual meeting, that is, a value of the estimation score of the following user states:
interest, attention, and favorable impression estimation score (evaluation value);
understanding, acceptance, and satisfaction estimation score (evaluation value); and
fatigue and stress estimation score (evaluation value),
or the icon data corresponding to the score, to the sales-side user terminal 22 via the communication unit 201.

The sales-side user terminal 22 outputs the icons described above with reference to Figs. 27 to 29 to the display unit.

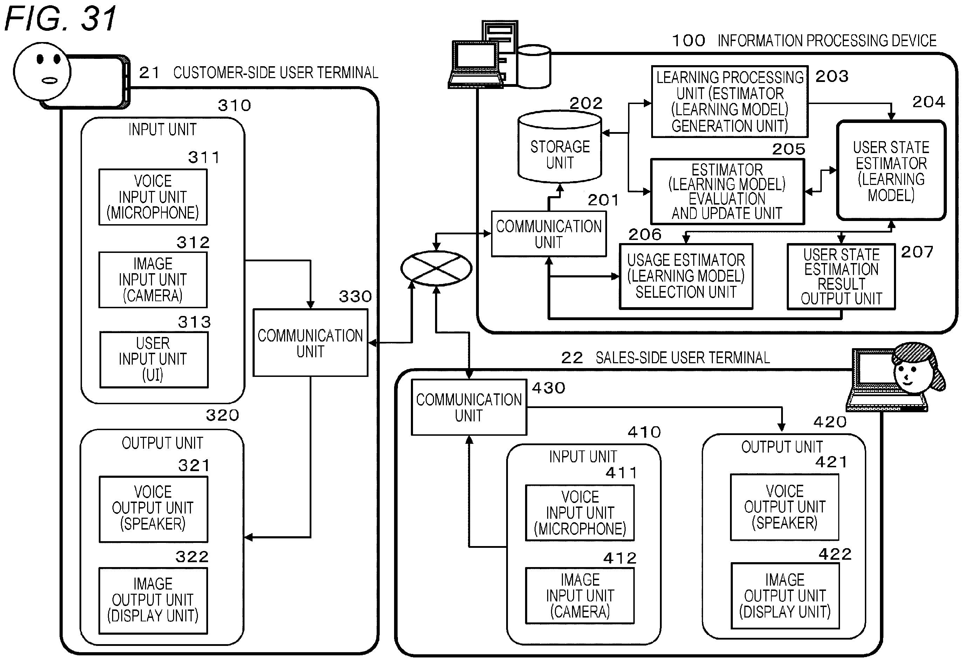

Next, configuration examples of three devices constituting the information processing system of the present disclosure, that is, the information processing device 100, the customer-side user terminal 21, and the sales-side user terminal 22 will be described with reference to Fig. 31.

The information processing device 100 illustrated in Fig. 31 has a configuration similar to that of the information processing device 100 described with reference to Fig. 30, and includes: the communication unit 201; the storage unit 202; the learning processing unit (estimator (learning model) generation unit) 203; the user state estimator (learning model) 204; the estimator (learning model) evaluation and update unit 205; the usage estimator (learning model) selection unit 206; and the user state estimation result output unit 207.

Each of these components has been described with reference to Fig. 30, and thus description thereof is omitted.

The customer-side user terminal 21 includes an input unit 310, an output unit 320, and a communication unit 330.

The input unit 310 includes a voice input unit (microphone) 311, an image input unit (camera) 312, and a user input unit (UI) 313.

The output unit 320 includes a voice output unit (speaker) 321 and an image output unit (display unit) 322.

The voice input unit (microphone) 311 of the input unit 310 acquires voice data such as the voice of the customer-side user. The acquired voice data is transmitted to the sales-side user terminal 22 and the information processing device 100 via the communication unit 330.

The image input unit (camera) 312 acquires image data such as the face image of the customer-side user. The acquired image data is transmitted to the sales-side user terminal 22 and the information processing device 100 via the communication unit 330.

The user input unit (UI) 313 is an interface for inputting a user state score (evaluation value) by the customer-side user 11 for example, at the time of executing the user state estimator (learning model) generation processing in the information processing device 100. For example, a touch-panel type display unit is used.

The input data of the user state score (evaluation value) input by the customer-side user 11 is transmitted to the information processing device 100, and used for learning processing executed in the estimator (learning model) generation processing.

Next, the configuration of the sales-side user terminal 22 will be described.

The sales-side user terminal 22 includes an input unit 410, an output unit 420, and a communication unit 430.

The input unit 410 includes a voice input unit (microphone) 411 and an image input unit (camera) 412.

The output unit 420 includes a voice output unit (speaker) 421 and an image output unit (display unit) 422.

The voice input unit (microphone) 411 of the input unit 410 acquires voice data such as the voice of the sales-side user. The acquired voice data is transmitted to the customer-side user terminal 21 and the information processing device 100 via the communication unit 430.

The image input unit (camera) 412 acquires image data such as the face image of the sales-side user. The acquired image data is transmitted to the customer-side user terminal 21 and the information processing device 100 via the communication unit 430.

Note that, for example, the icons indicating the user states described above with reference to Figs. 26 to 29 are displayed on the image output unit (display unit) 422.

The display icons are determined according to the user state estimation score estimated using the user state estimator (learning model).

### [7. Hardware configuration examples of information processing device and user terminal]

Next, hardware configuration examples of the information processing device and the user terminal will be described.

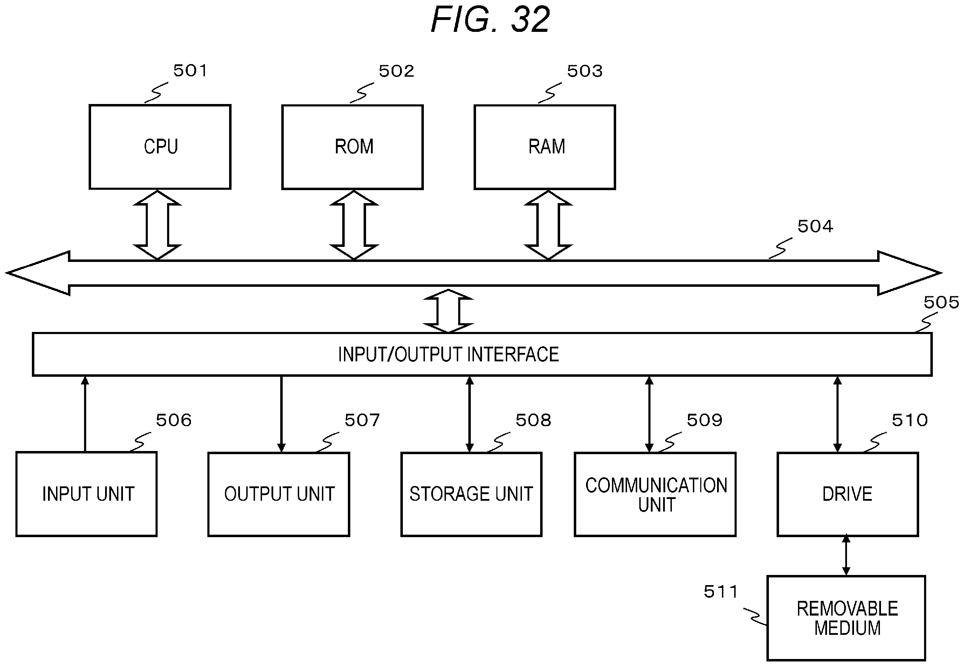

Fig. 32 is a diagram illustrating hardware configuration examples of the information processing device 100 of the present disclosure, and the customer-side user terminal 21 and the sales-side user terminal 22 that are user terminals.

Hereinafter, the hardware configuration illustrated in Fig. 32 will be described.

A central processing unit (CPU) 501 functions as a control unit or a data processing unit configured to execute various kinds of processing according to a program stored in a read only memory (ROM) 502 or a storage unit 508. For example, the CPU 501 executes the processing according to the sequence described in the above embodiment. A random access memory (RAM) 503 stores a program executed by the CPU 501, data, and the like. The CPU 501, the ROM 502, and the RAM 503 are mutually connected by a bus 504.

The CPU 501 is connected to an input/output interface 505 via the bus 504, and to the input/output interface 505, an input unit 506 that includes various switches, a keyboard, a mouse, a microphone, a sensor, or the like, and an output unit 507 that includes a display, a speaker, and the like are connected. The CPU 501 executes various kinds of processing in response to a command input from the input unit 506, and outputs a processing result to, for example, the output unit 507.

The storage unit 508 connected to the input/output interface 505 includes, for example, a hard disk, and the like and stores programs executed by the CPU 501 and various data. A communication unit 509 functions as a transmission-reception unit for Wi-Fi communication, Bluetooth (registered trademark) (BT) communication, and other data communication via a network such as the Internet or a local area network, and communicates with an external device.

A drive 510 connected to the input/output interface 505 drives a removable medium 511 such as a magnetic disk, an optical disk, a magneto-optical disk, or a semiconductor memory such as a memory card to record or read data.

### [8. Conclusion of configuration of present disclosure]

Hereinabove, the embodiment according to the present disclosure has been described in detail with reference to the specific embodiment. However, it is obvious that those skilled in the art can modify or substitute the embodiment without departing from the gist of the present disclosure. That is, the present invention has been disclosed in the form of exemplification, and should not be interpreted in a limited manner. In order to determine the gist of the present disclosure, the claims should be considered.

Note that the technology disclosed herein can have the following configurations.
(1) An information processing device including:
   a user state estimator generation unit configured to generate a user state estimator by executing machine learning processing using user state information input to a user terminal by a user participating in a meeting via a communication network, in which
   the user state estimator generation unit
   generates a user state estimator configured to estimate a user state on the basis of at least one of image data or voice data of a user participating in a meeting.
(2) The information processing device according to (1), in which
   the user state information is a degree-of-interest score indicating a degree-of-interest level of a user for a meeting, and
   the user state estimator generation unit
   executes machine learning processing using the degree-of-interest level score, to generate a user state estimator configured to estimate a degree-of-interest level of a meeting participant user.
(3) The information processing device according to (1) or (2), in which
   the user state information is a degree-of-understanding score indicating a degree-of-understanding level of a user for a meeting, and
   the user state estimator generation unit
   executes machine learning processing using the degree-of-understanding score, to generate a user state estimator configured to estimate a degree of understanding of a meeting participant user.
(4) The information processing device according to any one of (1) to (3), in which
   the user state information is a degree-of-fatigue score indicating a degree of fatigue of a user for a meeting, and
   the user state estimator generation unit
   executes machine learning processing using the degree-of-fatigue level score, to generate a user state estimator configured to estimate a degree-of-fatigue level of a meeting participant user.
(5) The information processing device according to any one of (1) to (4), in which
   the user state estimator generation unit
   generates a plurality of meeting-condition-corresponding user state estimators according to a meeting condition.
(6) The information processing device according to (5), in which
   the meeting condition includes
   at least one of conditions (a) to (d) below:
      (a) a genre of meeting;
      (b) a scale of a meeting;
      (c) fatigue of a meeting participant; or
      (d) busyness of a meeting participant.
(7) The information processing device according to (5) or (6), in which
   the information processing device includes:
   an estimator evaluation unit configured to evaluate user state estimation accuracy of a plurality of generated meeting-condition-corresponding user state estimators, and
   the estimator evaluation unit
   inputs test data according to a meeting condition to each of the plurality of generated meeting-condition-corresponding user state estimators to estimate a user state, determines whether or not an estimation result matches a user state score input by a user as correct data included in the test data, and calculates an accuracy rate.
(8) The information processing device according to any one of (5) to (7), in which the information processing device includes:
   a usage estimator selection unit configured to select an optimal meeting-condition-corresponding user state estimator according to a meeting condition, and
   the usage estimator selection unit
   selects a meeting-condition-corresponding user state estimator having a highest accuracy rate calculated by the estimator evaluation unit, as the optimal meeting-condition-corresponding user state estimator.
(9) The information processing device according to any one of (1) to (8), in which
   the user state estimator is
   a user state estimator configured to execute user state estimation processing using at least one of image data or voice data of a user who is a user state estimation target.
(10) The information processing device according to any one of (1) to (9), in which
   the user state estimator is
   a user state estimator configured to execute user state estimation processing using at least one of image data or voice data of a meeting participant user other than a user who is a user state estimation target.
(11) The information processing device according to any one of (1) to (10), in which
   the user state estimator generation unit
   generates the user state estimator by executing machine learning processing using user state information and image data or voice data within a predetermined period until an input timing of the user state information, the user state information being input to a user terminal by a meeting participant user.
(12) An information processing device including:
   a user state estimator configured to estimate a user state on the basis of at least one of image data or voice data of a user participating in a meeting via a communication network; and
   a user state estimation result output unit configured to output identification information indicating a user state estimated by the user state estimator, to a user terminal of a user participating in the meeting.
(13) The information processing device according to (12), in which the user state is at least one of a degree-of-interest level of a user for a meeting, a degree-of-understanding level of the user for the meeting, or a degree-of-fatigue level of the user for the meeting.
(14) The information processing device according to (12) or (13), in which
   the user state estimation result output unit
   outputs, to the user terminal, an identifier or an icon indicating at least one of a degree-of-interest level of a user for a meeting, a degree-of-understanding level of the user for the meeting, or a degree-of-fatigue level of the user for the meeting.
(15) The information processing device according to any one of (12) to (14), in which
   the information processing device further includes:
   a usage estimator selection unit configured to select an optimal meeting-condition-corresponding user state estimator configured to execute highly accurate user state estimation processing according to a meeting condition, and
   the information processing device
   executes user state estimation processing using the meeting-condition-corresponding user state estimator selected by the usage estimator selection unit.
(16) The information processing device according to (15), in which
   the meeting condition includes
   at least one of conditions (a) to (d) below:
      (a) a genre of meeting;
      (b) a scale of a meeting;
      (c) fatigue of a meeting participant; or
      (d) busyness of a meeting participant.
(17) An information processing method that is executed in an information processing device, the information processing method including,
   by a user state estimator generation unit,
   executing user state estimator generation processing of generating a user state estimator by executing machine learning processing using user state information input to a user terminal by a user participating in a meeting via a communication network, in which
   the user state estimator generation unit
   generates a user state estimator configured to estimate a user state on the basis of at least one of image data or voice data of a user participating in a meeting.
(18) An information processing method that is executed in an information processing device, the information processing method including;
   by a user state estimator,
   executing user state estimation processing of estimating a user state on the basis of at least one of image data or voice data of a user participating in a meeting via a communication network; and
   by a user state estimation result output unit,
   executing user state estimation result output processing of outputting identification information indicating a user state estimated by the user state estimator, to a user terminal of a user participating in the meeting.
(19) A program for causing an information processing device to execute information processing, the program causing:
   a user state estimator generation unit
   to execute user state estimator generation processing of generating a user state estimator by executing machine learning processing using user state information input to a user terminal by a user participating in a meeting via a communication network, in which
   the user state estimator is a user state estimator configured to estimate a user state on the basis of at least one of image data or voice data of a user participating in a meeting.
(20) A program for causing an information processing device to execute information processing, the program causing:
   a user state estimator
   to execute user state estimation processing of estimating a user state on the basis of at least one of image data or voice data of a user participating in a meeting via a communication network; and
   a user state estimation result output unit
   to execute user state estimation result output processing of outputting identification information indicating a user state estimated by the user state estimator, to a user terminal of a user participating in the meeting.

Furthermore, a series of processes described herein can be executed by hardware, software, or a configuration obtained by combining hardware and software. In a case of processing by software is executed, a program in which a processing sequence is recorded can be installed and performed in a memory in a computer incorporated in dedicated hardware, or the program can be installed and performed in a general-purpose computer capable of executing various types of processing. For example, the program can be recorded in advance in a recording medium. In addition to being installed in a computer from the recording medium, a program can be received via a network such as a local area network (LAN) or the Internet and installed in a recording medium such as an internal hard disk or the like.

Note that the various processes described herein may be executed not only in a chronological order in accordance with the description, but may also be executed in parallel or individually depending on processing capability of a device that executes the processing or depending on the necessity. Furthermore, a system herein described is a logical set configuration of a plurality of devices, and is not limited to a system in which devices of respective configurations are in the same housing.

### INDUSTRIAL APPLICABILITY

As described above, according to a configuration of an embodiment of the present disclosure, a configuration is realized in which a user state estimator configured to estimate a degree of interest, a degree of understanding, and the like of a user by performing learning processing using user state information input by a meeting participant user is generated and used.

Specifically, for example, by executing machine learning processing using user state information input to a user terminal by a user participating in a meeting via a communication network, a user state estimator configured to estimate a user state, for example, a degree of interest, a degree of understanding, and a degree of fatigue of a user on the basis of at least one of an image or voice of a meeting participant user is generated. Furthermore, the user state is estimated on the basis of an image and voice of a meeting participant user by using the generated user state estimator, and identification information and an icon indicating the estimated user state are output to the user terminal.

With this configuration, the configuration is realized in which the user state estimator configured to estimate a degree of interest, a degree of understanding, and the like of a user by performing the learning processing using user state information input by a meeting participant user is generated and used.

### REFERENCE SIGNS LIST

11 Customer-side user
12 Sales-side user
21 Customer-side user terminal
22 Sales-side user terminal
100 Information processing device
101 Image and voice database
121 Interest, attention, and favorable impression score database
122 Understanding, acceptance, and satisfaction score database
123 Fatigue and stress score database
131 Degree-of-interest estimator generation unit (degree-of-interest estimation learning model generation unit)
132 Degree-of-understanding estimator generation unit (degree-of-understanding estimation learning model generation unit)
133 Degree-of-fatigue estimator generation unit (degree-of-fatigue estimation learning model generation unit)
141 Degree-of-interest estimator (degree-of-interest estimation learning model)
142 Degree-of-understanding estimator (degree-of-understanding estimation learning model)
143 Degree-of-fatigue estimator (degree-of-fatigue estimation learning model)
150 Data selection unit
160 Meeting-condition-corresponding degree-of-interest estimator generation unit
170 Degree-of-interest estimator (degree-of-interest estimation learning model) storage unit
180 Estimator (learning model) evaluation unit
201 Communication unit
202 Storage unit
203 learning processing unit (estimator (learning model) generation unit)
204 User state estimator (learning model)
205 Estimator (learning model) evaluation and update unit
206 Usage estimator (learning model) selection unit
207 User state estimation result output unit
211 Image and voice database
212 Interest, attention, and favorable impression score database
213 Understanding, acceptance, and satisfaction score database
214 Fatigue and stress score database
221 Degree-of-interest estimators 1 to n (degree-of-interest estimation learning models 1 to n)
222 Degree-of-understanding estimators 1 to n (degree-of-understanding estimation learning models 1 to n)
223 Degree-of-fatigue estimators 1 to n (degree-of-fatigue estimation learning models 1 to n)
310 Input unit
311 Voice input unit (microphone)
312 Image input unit (camera)
313 User input unit (UI)
320 Output unit
321 Voice output unit (speaker)
322 Image output unit (display unit)
330 Communication unit
410 Input unit
411 Voice input unit (microphone)
412 Image input unit (camera)
420 Output unit
421 Voice output unit (speaker)
422 Image output unit (display unit)
430 Communication unit
501 CPU
502 ROM
503 RAM
504 Bus
505 Input/output interface
506 Input unit
507 Output unit
508 Storage unit
509 Communication unit
510 Drive
511 Removable medium

## Claims

1. An information processing device comprising:
a user state estimator generation unit configured to generate a user state estimator by executing machine learning processing using user state information input to a user terminal by a user participating in a meeting via a communication network, wherein
the user state estimator generation unit
generates a user state estimator configured to estimate a user state on a basis of at least one of image data or voice data of a user participating in a meeting.

2. The information processing device according to claim 1, wherein
the user state information is a degree-of-interest score indicating a degree-of-interest level of a user for a meeting, and
the user state estimator generation unit
executes machine learning processing using the degree-of-interest level score, to generate a user state estimator configured to estimate a degree-of-interest level of a meeting participant user.

3. The information processing device according to claim 1, wherein
the user state information is a degree-of-understanding score indicating a degree-of-understanding level of a user for a meeting, and
the user state estimator generation unit
executes machine learning processing using the degree-of-understanding score, to generate a user state estimator configured to estimate a degree of understanding of a meeting participant user.

4. The information processing device according to claim 1, wherein
the user state information is a degree-of-fatigue score indicating a degree of fatigue of a user for a meeting, and
the user state estimator generation unit
executes machine learning processing using the degree-of-fatigue level score, to generate a user state estimator configured to estimate a degree-of-fatigue level of a meeting participant user.

5. The information processing device according to claim 1, wherein
the user state estimator generation unit
generates a plurality of meeting-condition-corresponding user state estimators according to a meeting condition.

6. The information processing device according to claim 5, wherein
the meeting condition includes
at least one of conditions (a) to (d) below:
(a) a genre of meeting;
(b) a scale of a meeting;
(c) fatigue of a meeting participant; or
(d) busyness of a meeting participant.

7. The information processing device according to claim 5, wherein
the information processing device comprises:
an estimator evaluation unit configured to evaluate user state estimation accuracy of a plurality of generated meeting-condition-corresponding user state estimators, and
the estimator evaluation unit
inputs test data according to a meeting condition to each of the plurality of generated meeting-condition-corresponding user state estimators to estimate a user state, determines whether or not an estimation result matches a user state score input by a user as correct data included in the test data, and calculates an accuracy rate.

8. The information processing device according to claim 5, wherein
the information processing device comprises:
a usage estimator selection unit configured to select an optimal meeting-condition-corresponding user state estimator according to a meeting condition, and
the usage estimator selection unit
selects a meeting-condition-corresponding user state estimator having a highest accuracy rate calculated by the estimator evaluation unit, as the optimal meeting-condition-corresponding user state estimator.

9. The information processing device according to claim 1, wherein
the user state estimator is
a user state estimator configured to execute user state estimation processing using at least one of image data or voice data of a user who is a user state estimation target.

10. The information processing device according to claim 1, wherein
the user state estimator is
a user state estimator configured to execute user state estimation processing using at least one of image data or voice data of a meeting participant user other than a user who is a user state estimation target.

11. The information processing device according to claim 1, wherein
the user state estimator generation unit
generates the user state estimator by executing machine learning processing using user state information and image data or voice data within a predetermined period until an input timing of the user state information, the user state information being input to a user terminal by a meeting participant user.

12. An information processing device comprising:
a user state estimator configured to estimate a user state on a basis of at least one of image data or voice data of a user participating in a meeting via a communication network; and
a user state estimation result output unit configured to output identification information indicating a user state estimated by the user state estimator, to a user terminal of a user participating in the meeting.

13. The information processing device according to claim 12, wherein, the user state is at least one of a degree-of-interest level of a user for a meeting, a degree-of-understanding level of the user for the meeting, or a degree-of-fatigue level of the user for the meeting.

14. The information processing device according to claim 12, wherein
the user state estimation result output unit
outputs, to the user terminal, an identifier or an icon indicating at least one of a degree-of-interest level of a user for a meeting, a degree-of-understanding level of the user for the meeting, or a degree-of-fatigue level of the user for the meeting.

15. The information processing device according to claim 12, wherein
the information processing device further comprises:
a usage estimator selection unit configured to select an optimal meeting-condition-corresponding user state estimator configured to execute highly accurate user state estimation processing according to a meeting condition, and
the information processing device
executes user state estimation processing using the meeting-condition-corresponding user state estimator selected by the usage estimator selection unit.

16. The information processing device according to claim 15, wherein
the meeting condition includes
at least one of conditions (a) to (d) below:
(a) a genre of meeting;
(b) a scale of a meeting;
(c) fatigue of a meeting participant; or
(d) busyness of a meeting participant.

17. An information processing method that is executed in an information processing device, the information processing method comprising:
by a user state estimator generation unit,
executing user state estimator generation processing of generating a user state estimator by executing machine learning processing using user state information input to a user terminal by a user participating in a meeting via a communication network, wherein
the user state estimator generation unit
generates a user state estimator configured to estimate a user state on a basis of at least one of image data or voice data of a user participating in a meeting.

18. An information processing method that is executed in an information processing device, the information processing method comprising:
by a user state estimator,
executing user state estimation processing of estimating a user state on a basis of at least one of image data or voice data of a user participating in a meeting via a communication network; and
by a user state estimation result output unit,
executing user state estimation result output processing of outputting identification information indicating a user state estimated by the user state estimator, to a user terminal of a user participating in the meeting.

19. A program for causing an information processing device to execute information processing, the program causing:
a user state estimator generation unit
to execute user state estimator generation processing of generating a user state estimator by executing machine learning processing using user state information input to a user terminal by a user participating in a meeting via a communication network, wherein
the user state estimator is a user state estimator configured to estimate a user state on a basis of at least one of image data or voice data of a user participating in a meeting.

20. A program for causing an information processing device to execute information processing, the program causing:
a user state estimator
to execute user state estimation processing of estimating a user state on a basis of at least one of image data or voice data of a user participating in a meeting via a communication network; and
a user state estimation result output unit
to execute user state estimation result output processing of outputting identification information indicating a user state estimated by the user state estimator, to a user terminal of a user participating in the meeting.
